# EUROPEAN PATENT APPLICATION

(11) **EP 4 495 827 A1**
(43) Date of publication of application: **22.01.2025**
(21) Application number: 23791166.4
(22) Date of filing: 17.04.2023
(51) Int. Cl.: G06N 3/04

(54) **DATA PROCESSING METHOD, NEURAL NETWORK TRAINING METHOD AND RELATED DEVICE**

(30) Priority: 20.04.2022 CN 202210417652
(71) Applicant: Huawei Technologies Co., Ltd., Shenzhen, Guangdong 518129 (CN)
(72) Inventor: CHEN, Xiang, Shenzhen, Guangdong 518129 (CN); GAO, Junpeng, Shenzhen, Guangdong 518129 (CN)
(74) Representative: MERH-IP Matias Erny Reichl Hoffmann Patentanwälte PartG mbB
(86) International application number: PCT/CN2023/088617
(87) International publication number: WO 2023/202511

(57) **Abstract**

A data processing method, a neural network training method, and a related device are provided. The method may apply an artificial intelligence technology to the simulation field. The method includes: obtaining first information, where the first information includes a constraint condition of a parameter in a to-be-solved PDE and an initial mesh corresponding to the PDE, the PDE is obtained based on a to-be-simulated object, a shape of the initial mesh is determined based on the to-be-simulated object, and the initial mesh includes N first mesh points; and inputting the first information into a first neural network, to obtain N second mesh points output by the first neural network. The N second mesh points belong to an updated mesh, the updated mesh is used to solve the PDE, and the PDE does not need to be solved repeatedly. This takes short time, and reduces computer resource overheads. In addition, a mapping relationship between the N second mesh points and the N first mesh points is reversible. This avoids a meaningless numerical solution obtained through solving as far as possible.

## Description

This application claims priority to Chinese Patent Application No. 202210417652.X, filed with the China National Intellectual Property Administration on April 20, 2022 and entitled "DATA PROCESSING METHOD, NEURAL NETWORK TRAINING METHOD, AND RELATED DEVICE", which is incorporated herein by reference in its entirety.

### TECHNICAL FIELD

This application relates to the artificial intelligence field, and in particular, to a data processing method, a neural network training method, and a related device.

### BACKGROUND

A large quantity of physical systems may be described according to a partial differential equation (Partial Differential Equation, PDE). For example, in scenarios such as electromagnetic simulation, thermal simulation, electrostatic field simulation, semiconductor device simulation, fluid simulation, and structure simulation, a PDE corresponding to a to-be-simulated object may be obtained, and the PDE is solved.

For a conventional PDE solver, methods such as a finite difference method (finite difference method, FDM), a finite element method (finite element method, FEM), and a finite volume method (finite volume method, FVM) are based on mesh division. To be specific, a solution space corresponding to the PDE needs to be divided into a plurality of mesh elements, and then a solution of the PDE on each mesh element may be calculated by using the PDE solver, where "a solution space corresponding to the PDE" may also be understood as a solution area of the PDE.

Currently, after an initial mesh corresponding to the PDE is obtained, the initial mesh may be optimized by using a Monge-Ampère (Monge-Ampère, MA) method. By using the method, the PDE needs to be repeatedly solved, and the mesh is optimized based on an obtained solution of the PDE. This takes long time, and computer resource overheads are high.

### SUMMARY

Embodiments of this application provide a data processing method, a neural network training method, and a related device. An initial mesh is directly updated by using a first neural network, to obtain N second mesh points output by the first neural network, that is, an updated mesh, and a PDE does not need to be repeatedly solved. This takes short time, and reduces computer resource overheads. A mapping relationship between the N second mesh points and N first mesh points is reversible. This avoids a meaningless numerical solution obtained through solving as far as possible.

To resolve the foregoing technical problem, embodiments of this application provide the following technical solutions.

According to a first aspect, an embodiment of this application provides a data processing method, and an artificial intelligence technology may be applied to the simulation field. The method includes: An execution device obtains first information. The first information includes a constraint condition of a parameter in a to-be-solved partial differential equation PDE and an initial mesh corresponding to the PDE. Further, the PDE is obtained based on a to-be-simulated object. For example, if the PDE is used to perform simulation in fields such as thermodynamics and electricity, the Poisson equation (namely, an example of the PDE) may be selected. The Poisson equation may be used to describe distribution statuses of the thermal field, an electromagnetic field or another to-be-simulated object in the solution space when the thermal field, the electromagnetic field or the another to-be-simulated object are in steady states. For another example, when the PDE is used to perform fluid simulation, the Burgers equation (Burgers equation) may be selected.

A shape of the initial mesh may also be referred to as a shape of a solution space corresponding to the PDE, and the shape of the initial mesh is determined based on a to-be-simulated object. For example, if a reed is to be simulated, the shape of the initial mesh may be the same as a shape of the reed to be simulated. For example, if a thermal field around a heat emitting element on a chip is to be simulated, the shape of the initial mesh may be a top view of the chip or a shape of the chip. For another example, if an electromagnetic field around a specific electric charge is to be simulated, the shape of the initial mesh may be a solid centered on the charge, or the like. The initial mesh corresponding to the PDE is obtained after mesh processing is performed on the solution space corresponding to the PDE (also referred to as a solution area corresponding to the PDE). The initial mesh includes N first mesh points, where N is a positive integer.

The execution device inputs the first information into a first neural network to update the initial mesh by using the first neural network, to obtain N second mesh points output by the first neural network. The N second mesh points belong to an updated mesh, and the updated mesh is used to solve the PDE. A mapping relationship between the N second mesh points and the N first mesh points is reversible. In other words, after the N first mesh points are input into the first neural network, the N second mesh points output by the first neural network can be obtained, and the N first mesh points can be obtained through calculation based on the N second mesh points.

In this implementation, the initial mesh that needs to be optimized and the constraint condition of the parameter in the to-be-solved PDE are input into the first neural network, and the initial mesh is directly updated by using the first neural network, to obtain the N second mesh points output by the first neural network, that is, the updated mesh is obtained, and the PDE does not need to be solved repeatedly. This takes short time, and reduces computer resource overheads. In addition, the mapping relationship between the N second mesh points and the N first mesh points is reversible, to be specific, any two different first mesh points cannot be updated to a same second mesh point. The N first mesh points may be any N points within a boundary of the initial mesh. Therefore, the first neural network needs to ensure that any two points at different locations within the boundary of the initial mesh are not updated to points at a same location. This greatly ensures that the updated mesh does not fold. In other words, this greatly ensures that the solution space corresponding to the PDE can be divided into a plurality of meshes without overlapping and missing. "Dividing the solution space of the PDE into a plurality of meshes without overlapping and missing" is a basic principle of PDE numerical solution. This avoids a meaningless numerical solution obtained through solving as far as possible.

In a possible implementation of the first aspect, the initial mesh corresponding to the PDE may be obtained after uniform division is performed on the solution space corresponding to the PDE; or the initial mesh corresponding to the PDE may be obtained after non-uniform division is performed on the solution space corresponding to the PDE. Further, the initial mesh corresponding to the PDE may be obtained after random division is performed on the solution space corresponding to the PDE; or the initial mesh corresponding to the PDE may be obtained after one time of division is performed on the solution space corresponding to the PDE by using a conventional division method. The conventional division method may be specifically represented as any one of the following: Delaunay triangulation (Delaunay triangulation), an advancing front (advancing front) method, or another type of division method.

In a possible implementation of the first aspect, that the execution device inputs the first information into a first neural network to update the initial mesh by using the first neural network, to obtain N second mesh points output by the first neural network includes: The execution device inputs the constraint condition of the parameter in the to-be-solved PDE and location information of the N first mesh points into the first neural network, to update the initial mesh by using the first neural network, to obtain location information of the N second mesh points output by the first neural network; or
the execution device obtains a first graph structure corresponding to the initial mesh of the PDE, where a vertex of the first graph structure represents the first mesh point in the initial mesh, and an edge of the first graph structure represents a connection relationship between different first mesh points in the initial mesh; and the execution device inputs feature information of the constraint condition of the parameter in the to-be-solved PDE and the first graph structure into the first neural network, to obtain a second graph structure output by the first neural network. The second graph structure indicates the updated mesh. A vertex of the second graph structure represents the second mesh point in the updated mesh, and an edge in the second graph structure represents a connection relationship between different second mesh points.

In a possible implementation of the first aspect, that the execution device inputs first information into a neural network to update the initial mesh by using the first neural network, to obtain second information output by the first neural network includes: The execution device inputs the constraint condition of the parameter in the to-be-solved PDE into a first sub-neural network, to perform a feature extraction operation by using the first sub-neural network, to obtain the feature information of the constraint condition; and the execution device updates the initial mesh based on the feature information of the constraint condition and the initial mesh corresponding to the PDE by using a second sub-neural network, to obtain the N second mesh points. The first sub-neural network and the second sub-neural network are included in the first neural network, and the second sub-neural network may be a reversible neural network.

In this implementation, feature extraction is first performed on the constraint condition of the parameter in the PDE, and then the input initial mesh is updated by using the second sub-neural network under a constraint of the feature information of the constraint condition. This helps obtain rich information about the constraint condition of the parameter in the PDE. In other words, this helps improve understanding of the constraint condition of the parameter in the PDE by the first neural network, thereby improving an adaptation degree between a distribution status of a plurality of mesh elements in the updated mesh and the to-be-resolved PDE, and helping obtain a better updated mesh.

In a possible implementation of the first aspect, the second sub-neural network is obtained based on a spline neural network (spline neural network). In this embodiment of this application, a spline function in the spline neural network is used to process the N first mesh points. This can ensure that boundaries of the updated mesh and the initial mesh remain unchanged, thereby avoiding a meaningless numerical solution obtained through solving. In addition, the spline neural network implements a mapping between mesh points, in other words, the spline neural network learns a mapping capability of the PDE for continuous points in the whole solution space, and therefore can naturally generalize initial meshes of different densities. This helps ensure a generalization capability of the first neural network for different mesh densities.

In a possible implementation of the first aspect, the first neural network is obtained through training based on a loss function. The loss function includes a first loss function term and a second loss function term. The first loss function term indicates distances between the second mesh points and a target area, and shorter distances between the N second mesh points and the target area indicate a smaller value of the first loss function term. In other words, the first loss function term indicates a fitting degree between a plurality of mesh elements (or the N second mesh points) in the updated mesh and the target area. The target area in the solution space of the PDE refers to an area in which a numerical value of a solution fluctuates greatly in the solution space of the PDE, and a numerical fluctuation value of a solution in a unit area corresponding to the area exceeds a target threshold. For example, if the thermal field around the heat emitting element on a chip is to be simulated according to the PDE, the target area may be an area in which a temperature changes sharply on the chip, or may be understood as an area in which a temperature change exceeds a target threshold in a unit area on the chip. For another example, if the PDE is used to simulate deformation generated when a product or a product component is under pressure, the target area may be an area in which the deformation is generated in the product or the product component. Examples are not enumerated herein. The second loss function term indicates uniformity of distribution of the N second mesh points, and more uniform distribution of the N second mesh points indicates a smaller value of the second loss function term.

In this implementation, the first loss function term and the second loss function term may be used to guide the updated mesh to fit the target area as much as possible while overall uniformity is maintained. In this case, a skilled person may determine, based on technical experience, an area in which a value of the PDE changes sharply in the PDE solution space (in other words, determine the target area in the solution space of the PDE). Because the PDE does not need to be solved in this manner, training duration of the first neural network can be greatly shortened, and training costs of the first neural network are reduced.

In a possible implementation of the first aspect, the target area in the solution space of the to-be-solved PDE may include one or more lines in the solution space of the PDE, or the target area may include one or more planes in the solution space of the PDE. For any mesh point (hereinafter referred to as "target mesh point" for ease of description) in N prediction mesh points, optionally, a training device may determine a distance between the target mesh point and a point that is in the target area and that is closest to the target mesh point as a distance between the target mesh point and the target area. Further, the distance between the target mesh point and the point that is in the target area and that is closest to the target mesh point may specifically be any one of the following distances: an L1 distance between the target mesh point and the point that is in the target area and that is closest to the target mesh point, an L2 distance, a Euclidean distance, a cosine distance, or another type of distance.

In a possible implementation of the first aspect, the first neural network is obtained through training based on a loss function, the loss function includes a third loss function term, the updated mesh is used to obtain a predicted solution of the PDE on the updated mesh, and the third loss function term indicates a similarity between the predicted solution of the PDE on the updated mesh and an expected solution of the PDE on the updated mesh. In this implementation, after the updated mesh is obtained, the similarity between the predicted solution and the expected solution of the PDE on the updated mesh is further obtained, and the first neural network is trained by using the third loss function term, so that tightness of a mesh division process and a PDE solving process can be improved. In other words, this helps make a divided mesh more adaptable to a PDE solution phase, and helps a trained first neural network obtain a better updated mesh.

In a possible implementation of the first aspect, the first neural network is obtained through training based on a loss function. The loss function includes a fourth loss function term, and the fourth loss function term indicates a similarity between the N second mesh points and N expected mesh points. The N expected mesh points are obtained by using any one of the following methods: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method. In this implementation, the first neural network learns a capability of performing mesh division on the solution space of the PDE in a conventional method. However, compared with the conventional method, the PDE does not need to be repeatedly solved in a manner of optimizing the initial mesh by using the first neural network. This helps improve efficiency of a mesh division process and reduce computer resources consumed in the mesh division process.

In a possible implementation of the first aspect, the PDE is used to represent any one of the following information: a thermal field generated by a heat emitting element on a chip, deformation generated when a product is under pressure, or deformation generated when a product component is under pressure. In this implementation, a plurality of specific application scenarios for solving the PDE are provided, and implementation flexibility of this solution is improved.

According to a second aspect, an embodiment of this application provides a neural network training method, where an artificial intelligence technology may be applied to the simulation field. The method includes: A training device obtains first information, where the first information includes a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh includes N first mesh points, and N is a positive integer; the training device inputs the first information into a first neural network to update the initial mesh by using the first neural network, to obtain N prediction mesh points output by the first neural network, where the N prediction mesh points belong to an updated mesh, the updated mesh is used to solve the PDE, and a mapping relationship between the N prediction mesh points and the N first mesh points is reversible; and the training device trains the first neural network by using a loss function, to obtain a trained neural network, where a value of the loss function is obtained based on the N prediction mesh points.

In a possible implementation of the second aspect, the loss function includes a third loss function term, and that the training device trains the first neural network by using a loss function includes: The training device generates a value of the loss function based on a value of the third loss function term, and trains the first neural network based on the value of the loss function. The third loss function term indicates a similarity between a predicted solution and an expected solution of the PDE on the updated mesh.

In a possible implementation of the second aspect, before the training device generates a value of the loss function based on a value of the third loss function term, the method further includes: The training device solves the PDE based on the updated mesh and by using a PDE solver, to obtain the predicted solution of the PDE on the updated mesh, where the predicted solution of the PDE on the updated mesh is used to generate the value of the third loss function term; or the training device inputs the updated mesh and the PDE into a second neural network, to obtain a difference, generated by the second neural network, between a predicted solution and an expected solution of a PDE on the updated mesh.

In this implementation, two manners of generating the value of the third loss function term are provided. This helps improve implementation flexibility of this embodiment of this application. In addition, a function of the PDE solver is simulated by using a trained second neural network. This helps improve efficiency of a PDE solving process, and further helps improve efficiency of a training process of the first neural network.

In the second aspect of this application, the training device may be further configured to perform steps performed by the execution device in the first aspect and possible implementations of the first aspect. For specific implementations of steps in possible implementations of the second aspect, meanings of nouns, and brought beneficial effect, refer to the first aspect. Details are not described herein again.

According to a third aspect, an embodiment of this application provides a neural network training method, where an artificial intelligence technology may be applied to the simulation field. The method includes: A training device obtains first information, where the first information includes a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh includes N first mesh points, and N is a positive integer; the training device inputs the first information into a first neural network to update the initial mesh by using the first neural network, to obtain N prediction mesh points output by the first neural network, where the N prediction mesh points belong to an updated mesh, and the updated mesh is used to solve the PDE; and the training device trains the first neural network by using a loss function, to obtain a trained neural network, where a value of the loss function is obtained based on the N prediction mesh points.

The loss function includes a first loss function term and a second loss function term, and that the training device trains the first neural network by using a loss function includes: generating a value of the first loss function term based on distances between the N prediction mesh points and a target area, where the first loss function term indicates the distances between the 000N prediction mesh points and the target area, and shorter distances between N second mesh points and the target area indicate a smaller value of the first loss function term; generating a value of the second loss function term based on the N prediction mesh points, where the second loss function term indicates uniformity of distribution of the N prediction mesh points, and more uniform distribution of the N prediction mesh points indicates a smaller value of the second loss function term; and generating the value of the loss function based on the value of the first loss function term and the value of the second loss function term, and training the first neural network based on the value of the loss function.

In a possible implementation of the third aspect, a mapping relationship between the N prediction mesh points and the N first mesh points is reversible.

In the third aspect of this application, the training device may be further configured to perform steps performed by the training device in the second aspect and possible implementations of the second aspect. For specific implementations of steps in possible implementations of the third aspect, meanings of nouns, and brought beneficial effect, refer to the second aspect. Details are not described herein again.

According to a fourth aspect, an embodiment of this application provides a data processing apparatus, where an artificial intelligence technology may be applied to the simulation field. The data processing apparatus includes: an obtaining module, configured to obtain first information, where the first information includes a constraint condition of a parameter in a to-be-solved partial differential equation PDE and an initial mesh corresponding to the PDE, the PDE is obtained based on a to-be-simulated object, a shape of the initial mesh is determined based on the to-be-simulated object, the initial mesh includes N first mesh points, and N is a positive integer; and an update module, configured to input the first information into a first neural network to update the initial mesh by using the first neural network, to obtain N second mesh points output by the first neural network, where the N second mesh points belong to an updated mesh, the updated mesh is used to solve the PDE, and a mapping relationship between the N second mesh points and the N first mesh points is reversible.

In the fourth aspect of this application, the data processing apparatus may be further configured to perform steps performed by the execution device in the first aspect and possible implementations of the first aspect, specific implementations of steps in possible implementations of the fourth aspect, meanings of nouns, and brought beneficial effect, refer to the fourth aspect. Details are not described herein again.

According to a fifth aspect, an embodiment of this application provides a neural network training apparatus, where an artificial intelligence technology may be applied to the simulation field. The neural network training apparatus includes: an obtaining module, configured to obtain first information, where the first information includes a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh includes N first mesh points, and N is a positive integer; an update module, configured to input the first information into a first neural network to update the initial mesh by using the first neural network, to obtain N prediction mesh points output by the first neural network, where the N prediction mesh points belong to an updated mesh, the updated mesh is used to solve the PDE, and a mapping relationship between the N prediction mesh points and the N first mesh points is reversible; and a training module, configured to train the first neural network by using a loss function, to obtain a trained neural network, where a value of the loss function is obtained based on the N prediction mesh points.

In the fifth aspect of this application, the neural network training apparatus may be further configured to perform steps performed by the training device in the second aspect and possible implementations of the second aspect, specific implementations of steps in possible implementations of the fifth aspect, meanings of nouns, and brought beneficial effect, refer to the second aspect. Details are not described herein again.

According to a sixth aspect, an embodiment of this application provides a computer program product. The computer program product includes a program, and when the program is run on a computer, the computer is enabled to perform the data processing method in the first aspect, or the computer is enabled to perform the neural network training method according to the second aspect.

According to a seventh aspect, an embodiment of this application provides a computer-readable storage medium. The computer-readable storage medium stores a computer program, and when the computer program is run on a computer, the computer is enabled to perform the data processing method in the first aspect, or the computer is enabled to perform the neural network training method according to the second aspect.

According to an eighth aspect, an embodiment of this application provides an execution device, including a processor and a memory. The processor is coupled to the memory. The memory is configured to store a program. The processor is configured to execute the program in the memory, so that the execution device performs the data processing method according to the first aspect.

According to a ninth aspect, an embodiment of this application provides a training device, including a processor and a memory. The processor is coupled to the memory. The memory is configured to store a program. The processor is configured to execute the program in the memory, so that the training device performs the neural network training method according to the second aspect.

According to a tenth aspect, this application provides a chip system. The chip system includes a processor, configured to support an execution device or a training device in implementing a function in the foregoing aspects, for example, sending or processing data and/or information in the foregoing methods. In a possible design, the chip system further includes a memory. The memory is configured to store program instructions and data that are necessary for a terminal device or a communication device. The chip system may include a chip, or may include a chip and another discrete component.

### BRIEF DESCRIPTION OF DRAWINGS

FIG. 1a is a schematic diagram of a structure of an artificial intelligence main framework according to an embodiment of this application;
FIG. 1b is a schematic diagram of a solution of a PDE in a solution space in a data processing method according to an embodiment of this application;
FIG. 2a is a diagram of a system architecture of a mesh processing system according to an embodiment of this application;
FIG. 2b is a schematic flowchart of a data processing method according to an embodiment of this application;
FIG. 3A and FIG. 3B are a schematic flowchart of a neural network training method according to an embodiment of this application;
FIG. 4 shows two schematic diagrams of initial meshes in a data processing method according to an embodiment of this application;
FIG. 5 is a schematic diagram of a first sub-neural network in a data processing method according to an embodiment of this application;
FIG. 6 is a schematic diagram of a first neural network in a data processing method according to an embodiment of this application;
FIG. 7 is a schematic diagram of a target area in a data processing method according to an embodiment of this application;
FIG. 8 is a schematic flowchart of a data processing method according to an embodiment of this application;
FIG. 9 is a schematic flowchart of a data processing method according to an embodiment of this application;
FIG. 10 is a schematic diagram of comparison between mesh update performed by using a first neural network and mesh update performed by using a Monge-Ampère method according to an embodiment of this application;
FIG. 11 is a schematic diagram of a structure of a data processing apparatus according to an embodiment of this application;
FIG. 12 is a schematic diagram of a structure of a neural network training apparatus according to an embodiment of this application;
FIG. 13 is a schematic diagram of a structure of an execution device according to an embodiment of this application;
FIG. 14 is a schematic diagram of a structure of a training device according to an embodiment of this application; and
FIG. 15 is a schematic diagram of a structure of a chip according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include" and "have" and any variations thereof are intended to cover non-exclusive inclusion, so that a process, method, system, product, or device that includes a series of units is not necessarily limited to those units, but may include other units not explicitly listed or inherent to such a process, method, system, product, or device.

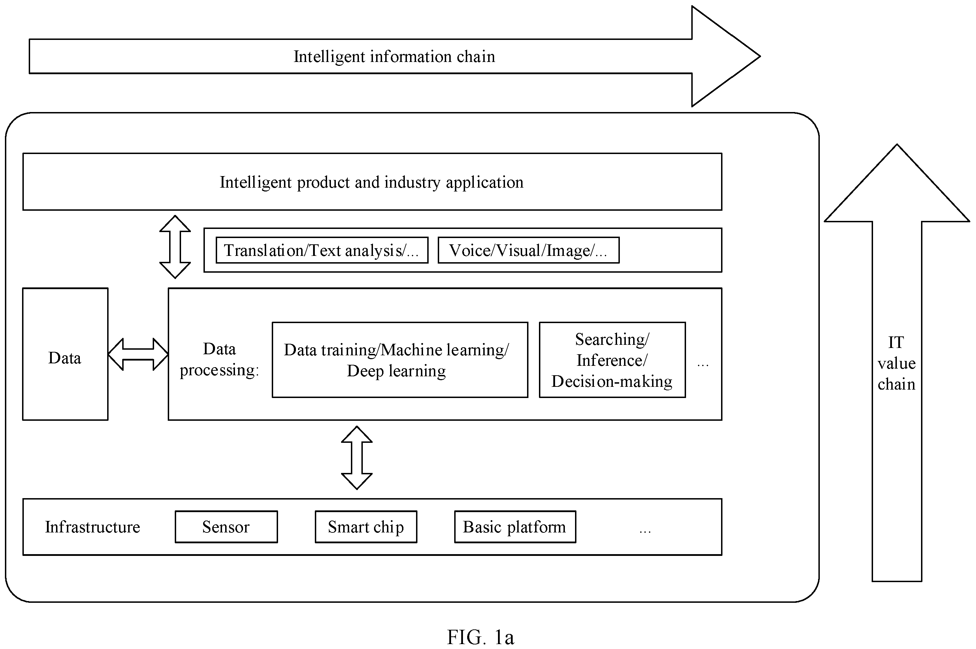

An overall working procedure of an artificial intelligence system is first described. FIG. 1a is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. The infrastructure communicates with the external world by using a sensor. A computing capability is provided by intelligent chips. The intelligent chips include but are not limited to hardware acceleration chips such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), and a field programmable gate array (field programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, speech, and text, and further relates to internet of things data of a conventional device. The internet of things data of the conventional device includes service data of an existing system, and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

### (4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

### (5) Intelligent product and industry application

The intelligent product and industry application are a product and an application of the artificial intelligence system in various fields, and are a package of an overall solution of the artificial intelligence, so that decision-making for intelligent information is productized and an application is implemented. Application fields thereof mainly include an intelligent terminal, intelligent manufacturing, intelligent transportation, a smart home, intelligent healthcare, intelligent security, autonomous driving, a smart city, and the like.

In embodiments of this application, an artificial intelligence technology may be applied to the PDE solution field, and a large quantity of physical systems in the foregoing application fields of the artificial intelligence technology may be described according to a PDE. For example, electromagnetic simulation, thermal simulation, electrostatic field simulation, semiconductor device simulation, fluid simulation, or structure simulation are performed according to the PDE, and the to-be-solved PDE is obtained based on a to-be-simulated object.

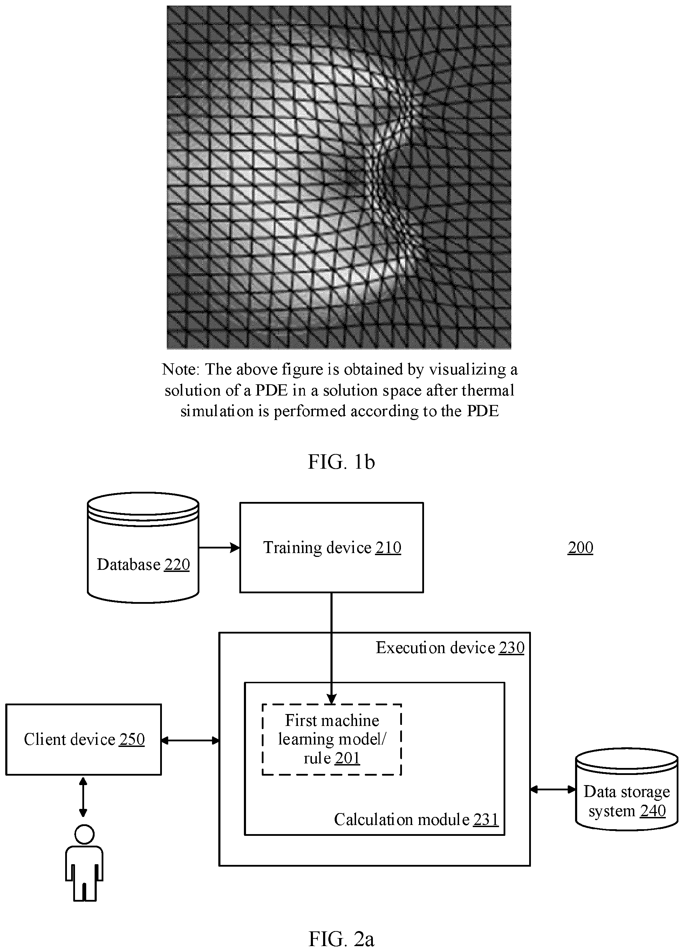

Further, for example, in the field of intelligent manufacturing, in a process of manufacturing a chip, one or more heat emitting elements are disposed on the chip. To determine positions of the one or more heat emitting elements on the chip, thermal simulation may be performed according to the PDE. In other words, on a premise that the position of the at least one heat emitting element on the chip is determined, a thermal field generated by the at least one heat emitting element is simulated according to the PDE, and the PDE is used to represent a temperature in a solution space corresponding to the chip. In a process of solving the PDE, a solution space corresponding to the PDE may be first divided into small meshes, and a solution (that is, a temperature corresponding to each mesh element) of the PDE in each mesh element may be obtained. For more intuitive understanding of this solution, FIG. 1b is a schematic diagram of a solution of the PDE in a solution space in a data processing method according to an embodiment of this application. It should be noted that, in FIG. 1b, the solution of the PDE in the solution space is displayed only after visual processing is performed. In actual application, the solution of the PDE may not be displayed in an image manner. In FIG. 1b, an example in which thermal simulation is performed according to a PDE and the solution space is a two-dimensional space is used. As shown in the figure, the solution space of the PDE is a square two-dimensional space, the square two-dimensional space is divided into a plurality of non-uniform mesh elements, and colors of different mesh elements are the same or different. Mesh elements in different colors represent different temperatures corresponding to the mesh elements, and mesh elements in a same color represent a same temperature corresponding to the mesh elements. It should be understood that the example in FIG. 1b is merely for ease of understanding of this solution, and is not intended to limit this solution.

For another example, in the field of intelligent manufacturing, when force analysis needs to be performed on a product, structure simulation may be performed on the product according to the PDE. A boundary of a solution space of the PDE may be determined based on a shape of the product, and the solution space of the PDE may be a three-dimensional space. After the solution space of the PDE is divided into a plurality of meshes (that is, the entire product is divided into a plurality of mesh elements), each mesh element represents a small part of the product, and a solution of the PDE in each mesh element may be obtained. The solution in each mesh element may represent deformation of a small part of the product after pressure is applied to the product.

For another example, in the field of smart home, when path planning needs to be performed on a robotic vacuum cleaner, a moving path of the robotic vacuum cleaner may be simulated according to a PDE, and a boundary of a solution space of the PDE may be determined based on a moving range of the robotic vacuum cleaner. The solution space of the PDE is divided into a plurality of meshes (that is, the entire moving range of the robotic vacuum cleaner is divided into a plurality of mesh elements). Then, a solution of the PDE in each mesh element may be obtained. The solution of the PDE in each mesh element indicates whether the robotic vacuum cleaner passes through an area represented by the mesh element, and the like. It should be noted that the foregoing description is merely for ease of understanding an application scenario of this solution. Embodiments of this application may be further applied to another application scenario, and the application scenarios of embodiments of this application are not enumerated herein.

In the foregoing application scenarios, before the PDE is solved, the solution space corresponding to the PDE needs to be divided into a plurality of mesh elements. To reduce computer overheads caused by the step of "obtaining a mesh corresponding to the solution space of the PDE", an embodiment of this application provides a data processing method. In the foregoing method, a mesh corresponding to the solution space of the PDE is optimized by using a trained first neural network. Before the data processing method provided in embodiments of this application is described, refer to FIG. 2a first. FIG. 2a is a diagram of a system architecture of a mesh processing system according to an embodiment of this application. In FIG. 2a, a mesh processing system 200 includes a training device 210, a database 220, an execution device 230, a data storage system 240, and a client device 250. The execution device 230 includes a calculation module 231.

The database 220 stores a training data set. The training device 210 generates a first model/rule 201, and performs iterative training on the first model/rule 201 by using the training data set, to obtain a trained first model/rule 201. The first model/rule 201 may be specifically represented as a neural network, or may be represented as a non-neural network model. In this embodiment of this application, only an example in which the first model/rule 201 is represented as a neural network is used for description.

The execution device 230 may invoke data, code, and the like in the data storage system 240, and may further store data, instructions, and the like in the data storage system 240. The data storage system 240 may be disposed in the execution device 230, or the data storage system 240 may be an external memory relative to the execution device 230.

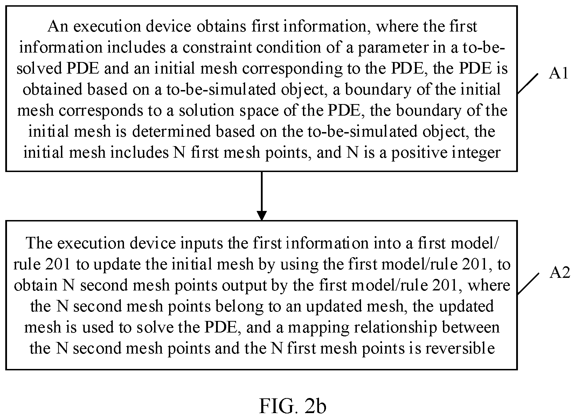

The trained first model/rule 201 obtained by the training device 210 may be deployed in the execution device 230, and the execution device 230 may optimize, by using the first model/rule 201, an initial mesh corresponding to the PDE, to obtain an updated mesh corresponding to the PDE. Specifically, FIG. 2b is a schematic flowchart of a data processing method according to an embodiment of this application. A1: An execution device obtains first information, where the first information includes a constraint condition of a parameter in a to-be-solved PDE (namely, partial differential equation) and an initial mesh corresponding to the PDE, the PDE is obtained based on a to-be-simulated object, a boundary of the initial mesh corresponds to a solution space of the PDE, the boundary of the initial mesh is determined based on the to-be-simulated object, the initial mesh includes N first mesh points, and N is a positive integer. A2: The execution device inputs the first information into the first model/rule 201 to update the initial mesh by using the first model/rule 201, to obtain N second mesh points output by the first model/rule 201, where the N second mesh points belong to an updated mesh, the updated mesh is used to solve the PDE, and a mapping relationship between the N second mesh points and the N first mesh points is reversible.

In this embodiment of this application, the initial mesh is directly updated by using the first neural network, and the PDE does not need to be solved repeatedly. This takes short time, and reduces computer resource overheads. In addition, the mapping relationship between the N second mesh points and the N first mesh points is reversible. This greatly ensures that the updated mesh does not fold. In other words, this greatly ensures that the solution space corresponding to the PDE can be divided into a plurality of meshes without overlapping and missing. "Dividing the solution space of the PDE into a plurality of meshes without overlapping and missing" is a basic principle of PDE numerical solution. This avoids a meaningless numerical solution obtained through solving as far as possible.

In some embodiments of this application, refer to FIG. 2a. The training device 210, the execution device 230, and the client device 250 may be separate devices, and the execution device 230 is configured with an I/O interface to exchange data with the client device 250. A "user" may input the first information to the I/O interface of the execution device 230 by using the client device 250, so that the execution device 230 generates the updated mesh by using the configured first model/rule 201.

Further, in an implementation, the execution device 230 may send the updated mesh to the client device 250 through the I/O interface, and the client device 250 may solve the PDE based on the updated mesh, and provide a solution of the PDE on the updated mesh to the user.

In another implementation, the execution device 230 may solve the PDE based on the updated mesh, and send the solution of the PDE on the updated mesh to the client device 250, and the client device 250 provides the solution of the PDE on the updated mesh to the user.

It should be noted that FIG. 2a is merely a schematic diagram of an architecture of two mesh processing systems according to an embodiment of the present invention, and position relationships between devices, components, modules, and the like shown in the figure constitute no limitation. For example, in some other embodiments of this application, the execution device 230 may be configured in the client device 250. For example, when the client device is a mobile phone or a tablet computer, the execution device 230 may be a module that is in a host central processing unit (Host CPU) of the mobile phone or the tablet computer and that is configured to perform optimization processing on a mesh in the solution space of the PDE, or the execution device 230 may be a graphics processing unit (graphics processing unit, GPU) or a neural-network processing unit (NPU) in the mobile phone or the tablet computer. The GPU or the NPU is mounted onto the host central processing unit as a coprocessor, and the host central processing unit allocates a task to the GPU or the NPU.

In some other embodiments of this application, the training device 210 and the execution device 230 may be specifically represented as a same device. In other words, the training device 210 and the execution device 230 may be represented as servers corresponding to the client device 250. In some other embodiments of this application, the training device 210, the execution device 230, and the client device 250 may be represented as one device, or the like. The mesh processing system 200 in this embodiment of this application may be flexibly constructed based on an actual application scenario. This is not limited herein.

With reference to the foregoing descriptions, the following describes specific implementation procedures of a training phase and an inference phase of the first neural network provided in embodiments of this application.

### I. Training phase

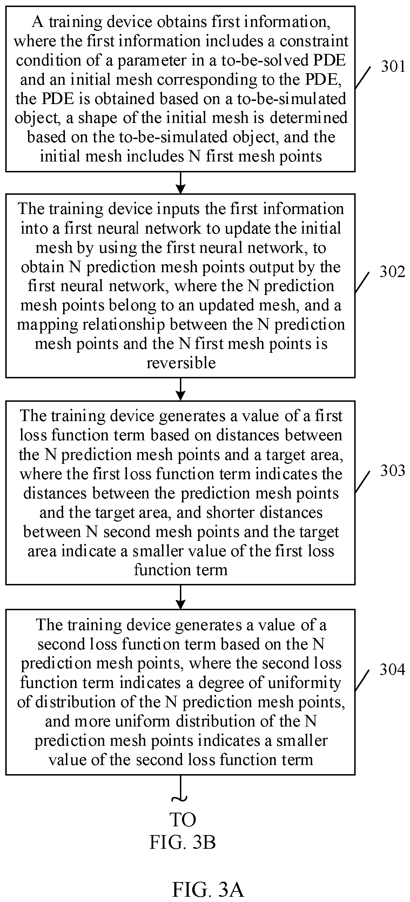

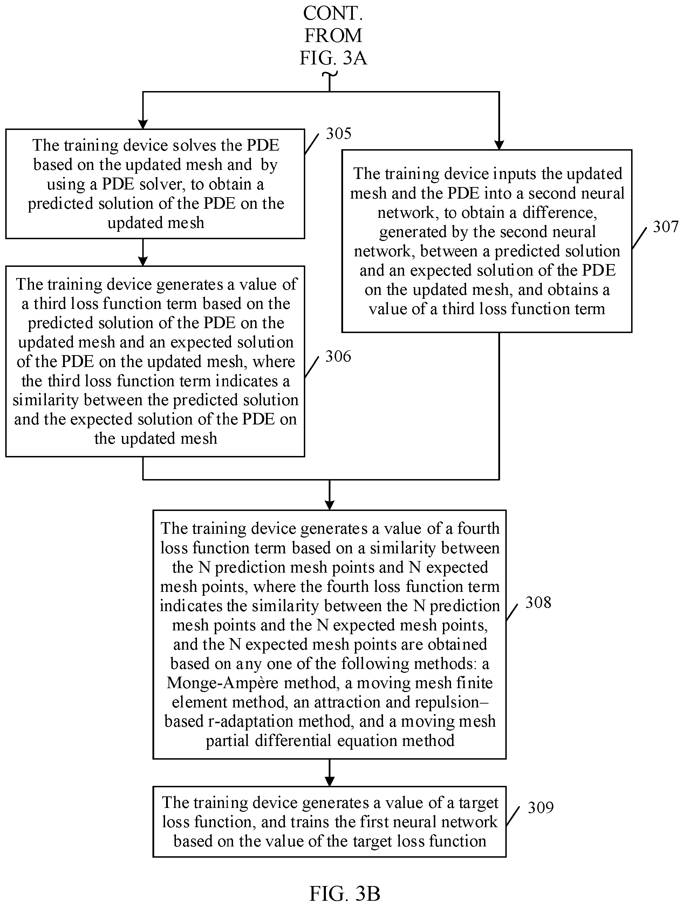

In embodiments of this application, the training phase describes a process in which the training device 210 obtains a trained first neural network by using training data in the database 220. Specifically, FIG. 3A and FIG. 3B are a schematic flowchart of a neural network training method according to an embodiment of this application. The neural network training method provided in embodiments of this application may include the following steps.

301: A training device obtains first information, where the first information includes a constraint condition of a parameter in a to-be-solved PDE and an initial mesh corresponding to the PDE, the PDE is obtained based on a to-be-simulated object, a shape of the initial mesh is determined based on the to-be-simulated object, and the initial mesh includes N first mesh points.

In this embodiment of this application, a training data set corresponding to a type of simulation problems may be configured on the training device. The training data set may include a plurality of groups of training data, and each group of training data includes at least the first information. The first information includes the constraint condition of the parameter in the to-be-solved PDE (namely, the partial differential equation) and the initial mesh corresponding to the PDE.

The PDE is obtained based on a to-be-simulated object. Simulation problems of a same type may be described by using a same PDE. For example, the PDE is used to represent any one of the following information: a thermal field generated by a heat emitting element on a chip, deformation generated when a product is under pressure, deformation generated when a product component is under pressure, or another type of information. This is specifically determined based on an actual application scenario. Examples are not enumerated herein. A plurality of specific application scenarios for solving the PDE are provided, and implementation flexibility of this solution is improved.

Different simulation problems in simulation problems of a same type may have different corresponding elements: a shape of a solution space corresponding to the PDE, a size of a solution space corresponding to the PDE, a constraint condition of a parameter in the PDE, a density of an initial mesh or another element corresponding to the PDE, and the like. Examples are not enumerated herein.

For example, the shape of the solution space corresponding to the PDE is used as an example. A specific type of simulation problems is to simulate a thermal field on a chip. In one time of solution, the solution space corresponding to the PDE may be a top view of the chip (that is, the initial mesh may be two-dimensional). In another time of solution, the solution space corresponding to the PDE may alternatively be a shape of the chip with a thickness (that is, the initial mesh may be three-dimensional). The foregoing two times of solution are a same type of simulation problems. For another example, different constraint conditions of parameters in the PDE are used as an example. For example, two heat emitting elements are placed on a chip in one time of solution, and three heat emitting elements are placed on the chip in another time of solution. Both the two times of solution are simulation problems of a same type. The examples herein are merely for ease of understanding of simulation problems of a same type, and are not intended to limit this solution.

Further, different types of simulation problems may be described according to different types of PDEs. For example, if the PDE is used to perform simulation in fields such as thermodynamics and electricity, the Poisson equation (namely, an example of the PDE) may be selected. The Poisson equation may be used to describe distribution statuses of the thermal field, an electromagnetic field or another to-be-simulated object in the solution space when the thermal field, the electromagnetic field or the another to-be-simulated object are in steady states. For another example, when the PDE is used to perform fluid simulation, the Burgers equation (Burgers equation) may be selected, and types of PDEs that are specifically used are not enumerated herein.

The to-be-simulated object may be a visible object. For example, the to-be-simulated object may be an airplane, a mobile phone, a tablet computer, a reed, or the like. The to-be-simulated object may alternatively be an invisible object. For example, the to-be-simulated object may be a thermal field, an electromagnetic field, a moving track of a wind, or the like. Examples are not enumerated herein.

The shape of the initial mesh may also be referred to as a shape of the solution space corresponding to the PDE, and the shape of the initial mesh is determined based on a to-be-simulated object. For example, if a reed is to be simulated, the shape of the initial mesh may be the same as a shape of the reed to be simulated. For example, if a thermal field around a heat emitting element on a chip is to be simulated, the shape of the initial mesh may be a top view of the chip or a shape of the chip. For another example, if an electromagnetic field around a specific electric charge is to be simulated, the shape of the initial mesh may be a solid centered on the charge, or the like. Shapes of the initial mesh are not enumerated herein.

The initial mesh corresponding to the PDE is obtained after mesh processing is performed on the solution space corresponding to the PDE (also referred to as a solution area corresponding to the PDE). The initial mesh includes N first mesh points. Because the solution space corresponding to the PDE (that is, the initial mesh corresponding to the PDE) may be two-dimensional or three-dimensional. Correspondingly, each mesh element in the initial mesh corresponding to the PDE may be specifically represented as a two-dimensional mesh element or a three-dimensional mesh element. For example, each mesh element may be specifically represented as a triangle, a quadrilateral, a tetrahedron, a hexahedron, or another shape. Examples are not enumerated herein.

Further, the initial mesh corresponding to the PDE may be obtained after uniform division is performed on the solution space corresponding to the PDE; or the initial mesh corresponding to the PDE may be obtained after non-uniform division is performed on the solution space corresponding to the PDE.

Still further, the initial mesh corresponding to the PDE may be obtained after the training device performs random division on the solution space corresponding to the PDE; or the initial mesh corresponding to the PDE may be obtained after the training device performs one time of division on the solution space corresponding to the PDE by using a conventional division method. The conventional division method may be specifically represented as any one of the following: Delaunay triangulation (Delaunay triangulation), an advancing front (advancing front) method, or another type of division method. Examples are not enumerated herein.

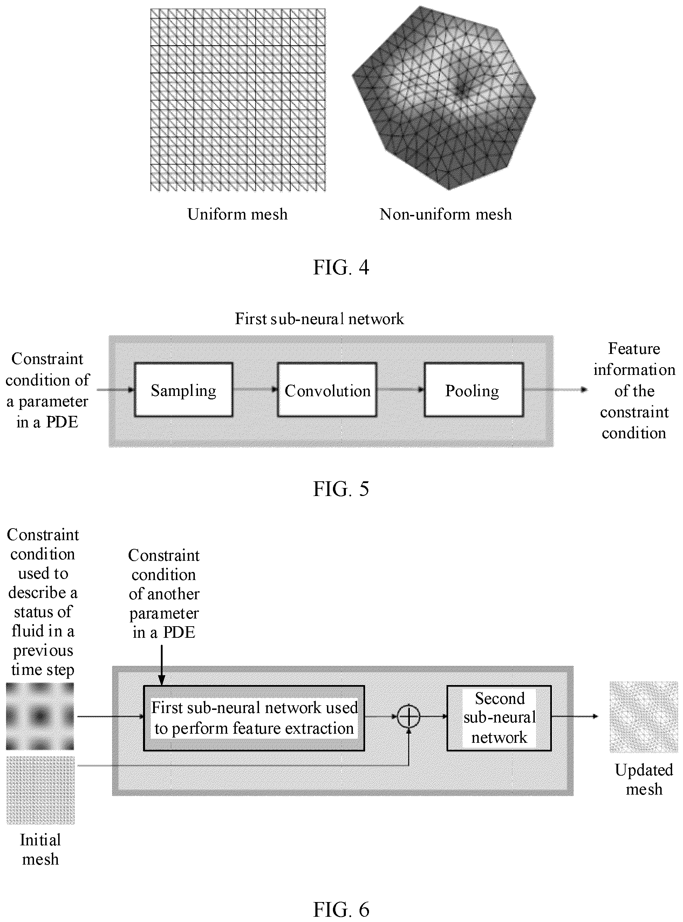

For more direct understanding of this solution, FIG. 4 shows two schematic diagrams of initial meshes in a data processing method according to an embodiment of this application. In FIG. 4, an initial mesh corresponding to the PDE is two-dimensional is used as an example. FIG. 4 includes two sub-schematic diagrams: a left sub-schematic diagram and a right sub-schematic diagram. An initial mesh shown in the left sub-schematic diagram in FIG. 4 includes a plurality of uniformly distributed mesh elements, and an initial mesh shown in the right sub-schematic diagram in FIG. 4 includes a plurality of non-uniform distributed mesh elements. It should be understood that the example in FIG. 4 is merely for ease of understanding of this solution, and is not intended to limit this solution.

Optionally, to improve a generalization capability of the trained first neural network, different groups of training data in the training data set may correspond to different simulation problems in simulation problems of a same type. For example, a specific type of simulation problems is described by using the Poisson equation. In three different groups of training data, a density of an initial mesh in one group of training data is 15×15, a density of an initial mesh in another group of training data may be 20×20, a density of an initial mesh in another group of training data may be 23×23, or the like.

For another example, fluid simulation is performed by using the Burgers equation, and a density of an initial mesh in the training data set may range from 15×15 to 20×20. Nine different fluid tracks are simulated by using the Burgers equation, and each track may include 60 time steps or the like. In fluid simulation, a constraint condition of a parameter in the Burgers equation includes a status of fluid in a previous time step, and statuses of fluid in previous time steps corresponding to different time steps in the 60 time steps may be the same or different. It should be understood that the example herein is merely for ease of understanding of the diversity of the training data set corresponding to the PDE used to solve a type of simulation problems, and are not intended to limit this solution.

302: The training device inputs the first information into the first neural network to update the initial mesh by using the first neural network, to obtain N prediction mesh points output by the first neural network, where the N prediction mesh points belong to an updated mesh, and a mapping relationship between the N prediction mesh points and the N first mesh points is reversible.

In this embodiment of this application, the training device inputs the first information into the first neural network to update the initial mesh by using the first neural network, to obtain the N prediction mesh points output by the first neural network. The N prediction mesh points belong to the updated mesh, and the N prediction mesh points output by the first neural network may be specifically represented as location information of the N prediction mesh points. For example, location information of each mesh point may be specifically represented as coordinates of each mesh point in the solution space of the PDE.

The mapping relationship between the N prediction mesh points and the N first mesh points is reversible. In other words, after the N first mesh points are input into the first neural network, the N prediction mesh points output by the first neural network can be obtained, and the N first mesh points can be obtained through calculation based on the N prediction mesh points.

Specifically, in an implementation, the first neural network may include a first sub-neural network and a second sub-neural network. The training device may input the constraint condition of the parameter in the to-be-solved PDE into the first sub-neural network, to perform a feature extraction (Feature Extractor) operation by using the first sub-neural network, to obtain feature information of the constraint condition. The training device may update the initial mesh by using the second sub-neural network and based on the feature information of the constraint condition and the initial mesh corresponding to the PDE, to obtain the N prediction mesh points.

The first sub-neural network may be specifically represented as a convolutional neural network, a residual neural network, another neural network used for feature extraction, or the like. Examples are not enumerated herein. For more intuitive understanding of this solution, first refer to FIG. 5. FIG. 5 is a schematic diagram of a first sub-neural network in a data processing method according to an embodiment of this application. The constraint condition of the parameter in the to-be-solved PDE is input into the first sub-neural network (that is, a feature extraction network). After uniform sampling, convolution, and pooling processing are performed on the first sub-neural network, the feature information of the constraint condition may be obtained. It should be understood that the example in FIG. 5 is merely for ease of understanding of this solution, and is not intended to limit this solution.

More specifically, for a processing process of the "second sub-neural network", in an implementation, the training device may input the feature information of the constraint condition and location information of the N first mesh points into the second sub-neural network, to obtain location information of N prediction mesh points output by the second sub-neural network. The training device generates the updated mesh based on the location information of the N prediction mesh points, a connection relationship between the N first mesh points, and a correspondence between the N prediction mesh points and the N first mesh points.

The second sub-neural network may be a reversible neural network. Optionally, the second sub-neural network may be obtained based on a spline neural network (spline neural network).

Further, after sequentially inputting coordinates of each first mesh point into the spline neural network (spline neural network), the training device may transform each dimension of the coordinates of the first mesh point according to a monotonic spline function, to obtain updated coordinates of the first mesh point (that is, coordinates of the prediction mesh point). If the solution space of the PDE is two-dimensional, the coordinates of the first mesh point may include coordinates of two dimensions. If the solution space of the PDE is three-dimensional, the coordinates of the first mesh point may include coordinates of three dimensions.

In this embodiment of this application, the spline function in the spline neural network is used to process the N first mesh points. This can ensure that boundaries of the updated mesh and the initial mesh remain unchanged, thereby avoiding a meaningless numerical solution obtained through solving. In addition, the spline neural network implements a mapping between mesh points, in other words, the spline neural network learns a mapping capability of the PDE for continuous points in the whole solution space, and therefore can naturally generalize initial meshes of different densities. This helps ensure a generalization capability of the first neural network for different mesh densities.

In another implementation, the training device may input the constraint condition of the parameter in the to-be-solved PDE into the first sub-neural network, to perform a feature extraction operation by using the first sub-neural network, to obtain feature information of the constraint condition. The training device may obtain a first graph structure corresponding to the initial mesh of the PDE. A vertex of the first graph structure represents the first mesh point in the initial mesh, and an edge of the first graph structure represents a connection relationship between different first mesh points in the initial mesh. The training device inputs the feature information of the constraint condition and the first graph structure into the second sub-neural network, to obtain a second graph structure output by the second sub-neural network. A vertex of the second graph structure represents the prediction mesh point in the updated mesh, and an edge of the second graph structure represents a connection relationship between different prediction mesh points, that is, the second graph structure indicates the updated mesh.

The second sub-neural network may be a reversible neural network. Optionally, the second sub-neural network may be obtained based on the spline neural network (spline neural network), the second sub-neural network may be obtained based on a graph attention network (graph attention network, GAT), the second sub-neural network may be obtained based on another type of neural network, or the like. This is not limited herein.

For more direct understanding of this solution, a processing process of the first neural network in an embodiment of this application is described with reference to FIG. 6. FIG. 6 is a schematic diagram of a first neural network in a data processing method according to an embodiment of this application. In FIG. 6, fluid simulation is performed according to the PDE. For example, the solution space of the PDE is two-dimensional. In FIG. 6, a constraint condition used to describe a status of fluid in a previous time step and the initial mesh are displayed after visual processing is performed. As shown in FIG. 6, the constraint condition used to describe the status of the fluid in the previous time step and a constraint condition of another parameter in the PDE are input into the first sub-neural network, to perform feature extraction by using the first sub-neural network. Then, the feature information of the constraint condition and the initial mesh are input into the second sub-neural network, to obtain the updated mesh. As shown in FIG. 6, distribution statuses of a plurality of mesh elements in the initial mesh and the updated mesh are different, in other words, the first neural network makes mesh elements in a part of area of the PDE solution space more dense, and makes mesh elements in a part of area of the PDE solution space more loose. It should be understood that the example in FIG. 6 is merely for ease of understanding of this solution, and is not intended to limit this solution.

In this embodiment of this application, feature extraction is first performed on the constraint condition of the parameter in the PDE, and then the input initial mesh is updated by using the second sub-neural network under a constraint of the feature information of the constraint condition. This helps obtain rich information about the constraint condition of the parameter in the PDE. In other words, this helps improve understanding of the constraint condition of the parameter in the PDE by the first neural network, thereby improving an adaptation degree between a distribution status of a plurality of mesh elements in the updated mesh and the to-be-resolved PDE, and helping obtain a better updated mesh.

In another implementation, the first neural network may alternatively include only the second sub-neural network. In this case, step 302 may include: The training device updates the initial mesh based on the constraint condition of the parameter in the PDE and the initial mesh corresponding to the PDE by using the second sub-neural network, to obtain N prediction mesh points.

More specifically, in an implementation, the training device may input the constraint condition and the location information of the N first mesh points into the second sub-neural network, to obtain the location information of the N prediction mesh points output by the second sub-neural network. The training device generates the updated mesh based on the location information of the N prediction mesh points, the connection relationship between the N first mesh points, and the correspondence between the N prediction mesh points and the N first mesh points.

In another implementation, the training device may obtain a first graph structure corresponding to the initial mesh of the PDE, and input the constraint condition and the first graph structure into the second sub-neural network, to obtain a second graph structure output by the second sub-neural network. The second graph structure indicates the updated mesh.

It should be noted that for concepts of the second sub-neural network, the first graph structure, and the second graph structure, refer to descriptions in the foregoing implementation. Details are not described herein again.

303: The training device generates a value of a first loss function term based on distances between the N prediction mesh points and a target area, where the first loss function term indicates the distances between the prediction mesh points and the target area, and shorter distances between N second mesh points and the target area indicate a smaller value of the first loss function term.

In some embodiments of this application, if a target loss function includes the first loss function term and a second loss function term, each group of training data may further include location information of the target area in the solution space of the PDE. The location information of the target area in the solution space of the PDE may be an area in which a solution of the PDE changes sharply, which is considered by a person skilled in the art. The training device may generate the value of the first loss function term based on the distances between the N prediction mesh points and the target area in the solution space of the to-be-solved PDE. The first loss function term indicates the distances between the N prediction mesh points and the target area, and shorter distances between the N second mesh points and the target area indicate a smaller value of the first loss function term. In other words, the first loss function term indicates a fitting degree between the plurality of mesh elements in the updated mesh and the target area.

Further, the target area in the solution space of the to-be-solved PDE may also be referred to as a target interface in the solution space of the to-be-solved PDE, and the target area may include one or more lines in the solution space of the PDE, or the target area may include one or more planes in the solution space of the PDE.

The target area in the solution space of the PDE refers to an area in which a numerical value of a solution fluctuates greatly in the solution space of the PDE, and a numerical fluctuation value of a solution in a unit area corresponding to the area exceeds a target threshold. For example, if the thermal field around the heat emitting element on a chip is to be simulated according to the PDE, the target area may be an area in which a temperature changes sharply on the chip, or may be understood as an area in which a temperature change exceeds a target threshold in a unit area on the chip. For another example, if the PDE is used to simulate deformation generated when a product or a product component is under pressure, the target area may be an area in which the deformation is generated in the product or the product component. A specific target area needs to be selected based on an actual application scenario. Examples are not enumerated herein.

For any mesh point (hereinafter referred to as "target mesh point" for ease of description) in the N prediction mesh points, optionally, the training device may determine a distance between the target mesh point and a point that is in the target area and that is closest to the target mesh point as a distance between the target mesh point and the target area.

Further, the distance between the target mesh point and the point that is in the target area and that is closest to the target mesh point may specifically be any one of the following distances: an L1 distance between the target mesh point and the point that is in the target area and that is closest to the target mesh point, an L2 distance, a Euclidean distance, a cosine distance, or another type of distance. This is not limited herein.

The training device traverses each of the N prediction mesh points to obtain a distance between each prediction mesh point and the target area, and determines the value of the first loss function term as any one of the following: an average value of the distances between the N prediction mesh points and the target area, a sum of the distances between the N prediction mesh points and the target area, a median value of the distances between the N prediction mesh points and the target area, or a value obtained after the distances between the N prediction mesh points and the target area are processed in another calculation manner, and the like.

304: The training device generates a value of the second loss function term based on the N prediction mesh points, where the second loss function term indicates uniformity of distribution of the N prediction mesh points, and more uniform distribution of the N prediction mesh points indicates a smaller value of the second loss function term.

In some embodiments of this application, the training device may further generate the value of the second loss function term based on the N prediction mesh points. The second loss function term indicates the uniformity of distribution of the N prediction mesh points, and more uniform distribution of the N prediction mesh points indicates a smaller value of the second loss function term.

Specifically, the training device may determine an average value of L2 distances between each prediction mesh point and first-order neighboring mesh points as the value of the second loss function term. Alternatively, the training device may determine an average value of L4 distances between each prediction mesh point and first-order neighboring mesh points as the value of the second loss function term. Alternatively, the training device may further indicate, through another calculation, uniformity of distribution of the N prediction mesh points in the solution space of the PDE. Examples are not enumerated herein.

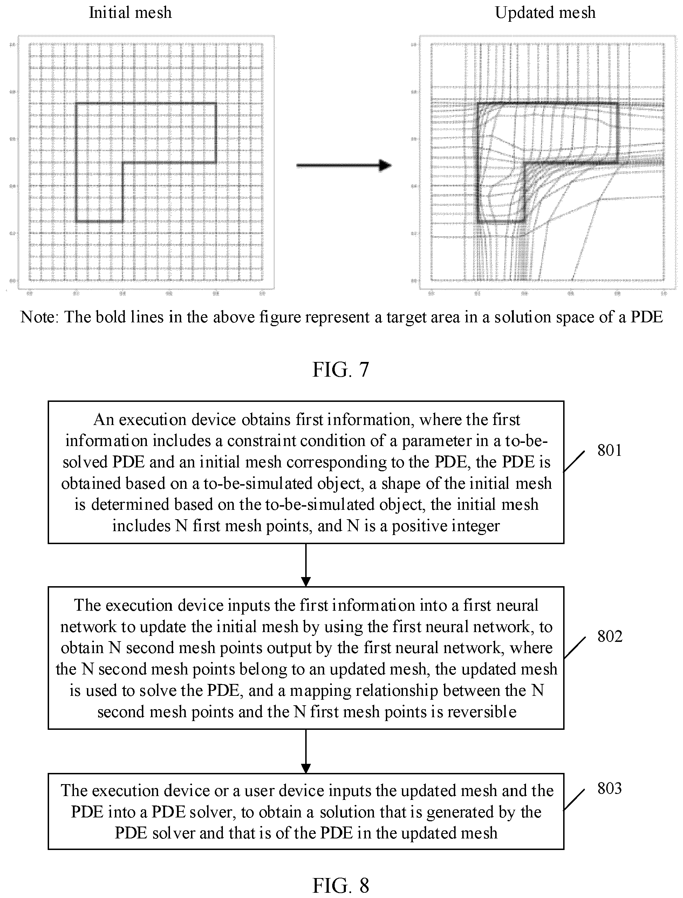

For more direct understanding of this solution, FIG. 7 is a schematic diagram of a target area in a data processing method according to an embodiment of this application. In FIG. 7, for example, the solution space of the PDE is two-dimensional, the initial mesh corresponding to the PDE includes a plurality of uniform meshes, and the target area is represented as a plurality of lines in the solution space of the PDE. FIG. 7 includes two sub-schematic diagrams: a left sub-schematic diagram and a right sub-schematic diagram. The left sub-schematic diagram in FIG. 7 represents the initial mesh of the PDE, and the right sub-schematic diagram in FIG. 7 represents the updated mesh, in other words, a mesh obtained after the initial mesh is updated by using the trained first neural network that is obtained by using the first loss function term and the second loss function term. As shown in FIG. 7, mesh elements around the target area (that is, six bold lines) are denser, and a plurality of mesh elements included in the updated mesh ensure overall uniformity. It should be understood that the example in FIG. 7 is merely for ease of understanding of this solution, and is not intended to limit this solution.

305: The training device solves the PDE based on the updated mesh and by using a PDE solver, to obtain a predicted solution of the PDE on the updated mesh.

In some embodiments of this application, after obtaining the updated mesh, the training device may input the updated mesh and the to-be-solved PDE into the PDE solver, to solve the PDE by using the PDE solver, to obtain the predicted solution of the PDE on the updated mesh. The predicted solution of the PDE on the updated mesh includes a predicted solution of the PDE on each mesh element in the updated mesh.

306: The training device generates a value of a third loss function term based on the predicted solution of the PDE on the updated mesh and an expected solution of the PDE on the updated mesh, where the third loss function term indicates a similarity between the predicted solution and the expected solution of the PDE on the updated mesh.

In some embodiments of this application, if the target loss function includes the third loss function term, each group of training data may further include an expected solution of the PDE in the solution space (also referred to as the expected solution of the PDE on the updated mesh). The expected solution of the PDE in the solution space includes an expected solution of the PDE on each mesh element in the updated mesh. The training device may generate the value of the third loss function term. The third loss function term indicates the similarity between the predicted solution and the expected solution of the PDE on the updated mesh. A training objective corresponding to the third loss function term includes improving the similarity between the predicted solution and the expected solution of the PDE on the updated mesh.

For a process of obtaining the expected solution of the PDE in the solution space, in an implementation, the solution space of the PDE may be divided into meshes of a target density by using a conventional mesh division method. An order of magnitude of the target density is far greater than an order of magnitude of a density of the updated mesh. For example, if the updated mesh includes 20×20 mesh elements, the mesh of the target density may include 100×100 mesh elements. Then, a solution (which may be considered as an expected solution) of the PDE in the mesh of the target density is obtained by using the PDE solver, and then the expected solution of the PDE on the updated mesh may be obtained based on a location correspondence between the mesh of the target density and the updated mesh.

In another implementation, an actual simulation experiment may alternatively be directly performed on the to-be-solved PDE, and the expected solution of the PDE on the updated mesh is obtained through measurement, and the like. Manners of obtaining the expected solution of the PDE in the solution space are not enumerated herein.

307: The training device inputs the updated mesh and the PDE into a second neural network, to obtain a difference, generated by the second neural network, between the predicted solution and the expected solution of the PDE on the updated mesh, and obtains a value of a third loss function term.

In some embodiments of this application, if the target loss function includes the third loss function term, the second neural network may be configured on the training device. The training device inputs the updated mesh and the PDE into the second neural network, to obtain the difference, generated by the second neural network, between the predicted solution and the expected solution of the PDE on the updated mesh. The difference between the predicted solution and the expected solution of the PDE on the updated mesh includes a difference between a predicted solution and an expected solution of the PDE on each mesh element in the updated mesh.

The training device may generate the value of the third loss function term based on the difference between the predicted solution and the expected solution of the PDE on each mesh element in the updated mesh. Specifically, the training device may determine a sum of differences between predicted solutions and expected solutions of the PDE on the plurality of mesh elements in the updated mesh as the value of the third loss function term. Alternatively, a maximum value of the differences between the predicted solutions and the expected solutions on the plurality of mesh elements may alternatively be determined as the value of the third loss function term. Alternatively, an average value of the sum of the differences between the predicted solutions and the expected solutions of the PDE on the plurality of mesh elements in the updated mesh may be determined as the value of the third loss function term, or the like. Manners of determining the value of the third loss function term are not enumerated herein.

The second neural network is a neural network that has performed a trained operation, and the second neural network is configured to simulate a function of the PDE solver. For example, the second neural network may be specifically represented as a fully connected neural network (MLP), a convolutional neural network (convolutional neural network, CNN), a neural operator (Neural Operator), or another type of neural network.

In this embodiment of this application, two manners of generating the value of the third loss function term are provided. This helps improve implementation flexibility of this embodiment of this application. In addition, the function of the PDE solver is simulated by using a trained second neural network. This helps improve efficiency of a PDE solving process, and further helps improve efficiency of a training process of the first neural network.

308: The training device generates a value of a fourth loss function term based on a similarity between the N prediction mesh points and N expected mesh points, where the fourth loss function term indicates the similarity between the N prediction mesh points and the N expected mesh points, and the N expected mesh points are obtained by using any one of the following methods: a Monge-Ampère method, a moving mesh finite element method, an attraction and repulsion-based r-adaptation method, and a moving mesh partial differential equation method.

In some embodiments of this application, if the target loss function includes the fourth loss function term, each group of training data may further include location information of the N expected mesh points corresponding to the PDE. The N expected mesh points are obtained by dividing the solution space of the PDE by using any one of the following methods: the Monge-Ampère method, the moving mesh finite element method (moving mesh finite element method), the attraction and repulsion-based r-adaptation (attraction and repulsion-based r-adaptation) method, the moving mesh partial differential equation (moving mesh PDE) method, and another conventional mesh division method. Examples are not enumerated herein.

After obtaining the N prediction mesh points, the training device may generate the value of the fourth loss function term based on the similarity between the N prediction mesh points and the N expected mesh points. The fourth loss function term indicates the similarity between the N prediction mesh points and the N expected mesh points, and a training objective corresponding to the fourth loss function term includes improving the similarity between the N prediction mesh points and the N expected mesh points.

309: The training device generates a value of the target loss function, and trains the first neural network based on the value of the target loss function.

In this embodiment of this application, after generating the value of the target loss function, the training device performs gradient derivation on the value of the target loss function, and updates a weight parameter in the first neural network through backpropagation in the first neural network, to complete one time of training of the first neural network. The training device may repeatedly perform the foregoing operations, to perform iterative training on the first neural network until a convergence condition is met, to obtain the trained first neural network.

The convergence condition may be a convergence condition that meets the target loss function, or the convergence condition may be that a quantity of times of iterative training reaches a preset quantity of times.

For a process of obtaining the value of the target loss function, steps 303 to 308 are optional, and steps 305 and 306 are mutually exclusive with step 307. If steps 305 and 306 are performed, step 307 does not need to be performed. If step 307 is performed, steps 305 and 306 do not need to be performed. In an implementation, if steps 303 and 304 are performed, and steps 305 to 308 are not performed, the target loss function may include the first loss function term and the second loss function term. The training device may obtain the value of the target loss function by performing weighted summation on the value of the first loss function term and the value of the second loss function term.

In another implementation, if steps 305 and 306 are performed, and steps 303, 304, 307, and 308 are not performed, or if step 307 is performed and steps 303, 304, 305, 306, and 308 are not performed, the target loss function may include the third loss function term, and the training device may determine the value of the third loss function term as the value of the target loss function.

In another implementation, if steps 303 to 307 are not performed, and step 308 is performed, the target loss function may include the fourth loss function term, and the training device may determine the value of the fourth loss function term as the value of the target loss function.

In another implementation, if steps 303 to 306 are performed, and steps 307 and 308 are not performed, or if steps 303, 304, and 307 are performed, and steps 305, 306, and 308 are not performed, the target loss function may include the first loss function term, the second loss function term, and the third loss function term. In this case, the training device may perform weighted summation on the value of the first loss function term, the value of the second loss function term, and the value of the third loss function term, to obtain the value of the target loss function.

In another implementation, if steps 303, 304, and 308 are performed, and steps 305 to 307 are not performed, the target loss function may include the first loss function term, the second loss function term, and the fourth loss function term. In this case, the training device may perform weighted summation on the value of the first loss function term, the value of the second loss function term, and the value of the fourth loss function term, to obtain the value of the target loss function.

In another implementation, if steps 305, 306, and 308 are performed, and steps 303, 304, and 307 are not performed, or if steps 307 and 308 are performed, and steps 303 to 306 are not performed, the target loss function may include the third loss function term and the fourth loss function term. In this case, the training device may perform weighted summation on the value of the third loss function term and the value of the fourth loss function term, to obtain the value of the target loss function.

In another implementation, if steps 303 to 306 and 308 are performed, and step 307 is not performed, or if steps 303, 304, 307, and 308 are performed, and steps 305 and 306 are not performed, the target loss function may include the first loss function term, the second loss function term, the third loss function term, and the fourth loss function term. In this case, the training device may perform weighted summation on the value of the first loss function term, the value of the second loss function term, the value of the third loss function term, and the value of the fourth loss function term, to obtain the value of the target loss function.

In this embodiment of this application, the first loss function term and the second loss function term may be used to guide the updated mesh to fit the target area as much as possible while overall uniformity is maintained. In this case, a skilled person may determine, based on technical experience, an area in which a value of the PDE changes sharply in the PDE solution space (in other words, determine the target area in the solution space of the PDE). Because the PDE does not need to be solved in this manner, training duration of the first neural network can be greatly shortened, and training costs of the first neural network are reduced.

After the updated mesh is obtained, the similarity between the predicted solution and the expected solution of the PDE on the updated mesh is further obtained, and the first neural network is trained by using the third loss function term, so that tightness of a mesh division process and a PDE solving process can be improved. In other words, this helps make a divided mesh more adaptable to a PDE solution phase, and helps a trained first neural network obtain a better updated mesh.

The first neural network learns a capability of performing mesh division on the solution space of the PDE in a conventional method. However, compared with the conventional method, the PDE does not need to be repeatedly solved in a manner of optimizing the initial mesh by using the first neural network. This helps improve efficiency of a mesh division process and reduce computer resources consumed in the mesh division process.

An embodiment of this application further provides a data processing method. FIG. 8 is a schematic flowchart of a data processing method according to an embodiment of this application. The data processing method provided in this embodiment of this application may include the following steps.

801: An execution device obtains first information, where the first information includes a constraint condition of a parameter in a to-be-solved PDE and an initial mesh corresponding to the PDE, the PDE is obtained based on a to-be-simulated object, a shape of the initial mesh is determined based on the to-be-simulated object, the initial mesh includes N first mesh points, and N is a positive integer.

802: The execution device inputs the first information into a first neural network to update the initial mesh by using the first neural network, to obtain N second mesh points output by the first neural network, where the N second mesh points belong to an updated mesh, the updated mesh is used to solve the PDE, and a mapping relationship between the N second mesh points and the N first mesh points is reversible.

In this embodiment of this application, for specific implementations of steps 801 and 802, refer to descriptions of steps 301 and 302 in the embodiment corresponding to FIG. 3. The first neural network is obtained by using the neural network training method provided in the embodiment corresponding to FIG. 3. For meanings of nouns in steps 801 and 802, refer to descriptions in the embodiment corresponding to FIG. 3. Details are not described herein again.

Further, in step 801, if the execution device on which a trained first neural network is deployed and a user device are a same device, the execution device may receive the first information input by a user. If the execution device on which the trained first neural network is deployed and the user device are different devices, the execution device may receive the first information sent by the user device.

803: The execution device or the user device inputs the updated mesh and the PDE into a PDE solver, to obtain a solution that is generated by the PDE solver and that is of the PDE in the updated mesh.

In this embodiment of this application, if the execution device on which the trained first neural network is deployed and the user device are a same device, the execution device may directly input the updated mesh and the PDE into the PDE solver, to obtain the solution that is generated by the PDE solver and that is of the PDE in the updated mesh.

If the execution device on which the trained first neural network is deployed and the user device are different devices, the execution device may input the updated mesh and the PDE into the PDE solver, to obtain the solution that is generated by the PDE solver and that is of the PDE in the updated mesh, and send the solution of the PDE in the updated mesh to the user device. Alternatively, the execution device may send the updated mesh corresponding to the PDE to the user device, and the user device inputs the updated mesh and the PDE into the PDE solver, to obtain the solution that is generated by the PDE solver and that is of the PDE in the updated mesh.

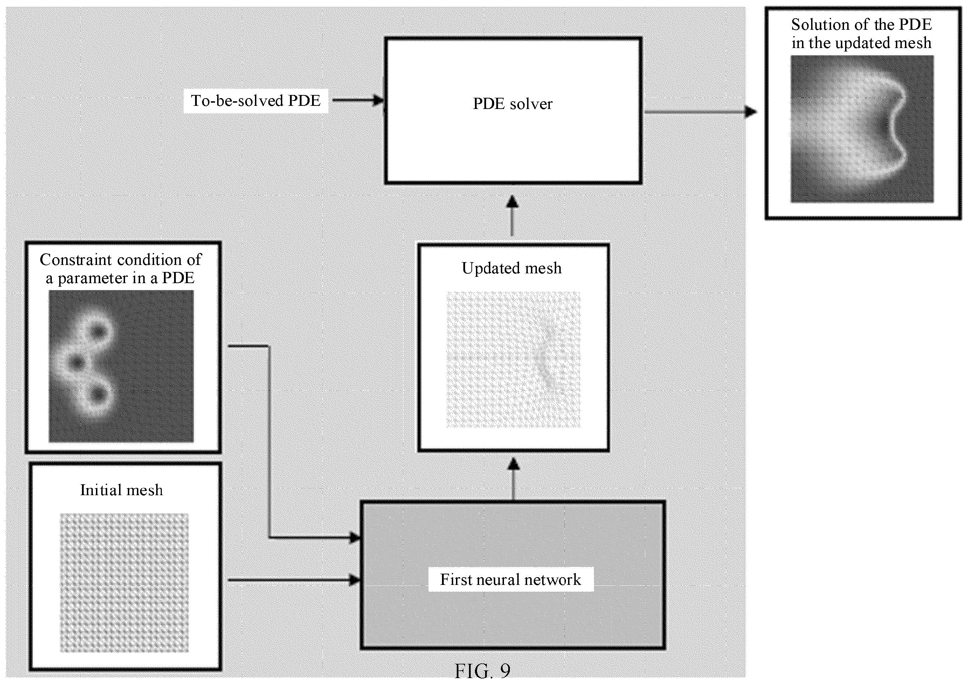

For more intuitive understanding of this solution, FIG. 9 is a schematic flowchart of a data processing method according to an embodiment of this application. In FIG. 9, an example in which mesh optimization and PDE solving are performed on a same device, and a PDE is used to perform thermal simulation is used. In FIG. 9, a constraint condition of a parameter in the PDE, an initial mesh, an updated mesh, and a solution of the PDE in the updated mesh are visualized. As shown in the figure, the constraint condition of the parameter in the PDE and the initial mesh corresponding to the PDE are input into a trained first neural network, to obtain the updated mesh. The updated mesh and the PDE are input into a PDE solver, to obtain a solution that is generated by the PDE solver and that is of the PDE in the updated mesh. It should be understood that the example in FIG. 9 is merely for ease of understanding of this solution, and is not intended to limit this solution.

In this implementation, the initial mesh that needs to be optimized and the constraint condition of the parameter in the to-be-solved PDE are input into the first neural network, and the initial mesh is directly updated by using the first neural network, to obtain the N second mesh points output by the first neural network, that is, the updated mesh is obtained, and the PDE does not need to be solved repeatedly. This takes short time, and reduces computer resource overheads. In addition, the mapping relationship between the N second mesh points and the N first mesh points is reversible, to be specific, any two different first mesh points cannot be updated to a same second mesh point. The N first mesh points may be any N points within a boundary of the initial mesh. Therefore, the first neural network needs to ensure that any two points at different locations within the boundary of the initial mesh are not updated to points at a same location. This greatly ensures that the updated mesh does not fold. In other words, this greatly ensures that the solution space corresponding to the PDE can be divided into a plurality of meshes without overlapping and missing. "Dividing the solution space of the PDE into a plurality of meshes without overlapping and missing" is a basic principle of PDE numerical solution. This avoids a meaningless numerical solution obtained through solving as far as possible.

For more intuitive understanding of beneficial effect brought by embodiments of this application, the following describes the beneficial effect with reference to experimental data. For example, an experiment is first performed by using the Poisson equation in the PDE. When the trained first neural network processes data in a test set, the generated updated mesh does not fold. Compared with a uniform mesh, an error of PDE solution can be reduced by 20.82±0.35% on average by using the updated mesh generated by the first neural network to solve the PDE. By contrast, an error of PDE solution can be reduced by 23.11% on average by using the updated mesh obtained by using the conventional Monge-Ampère method to solve the PDE. In addition, average time consumed when mesh update is performed by using the Monge-Ampère method is 5220.99 ms, and average time consumed when mesh update is performed by using the first neural network in this embodiment of this application is 5.55±0.01 ms. Therefore, performing mesh update by using the first neural network in this embodiment of this application can achieve a PDE solution gain close to that of the conventional Monge-Ampère method, and time consumption is only one thousandth.

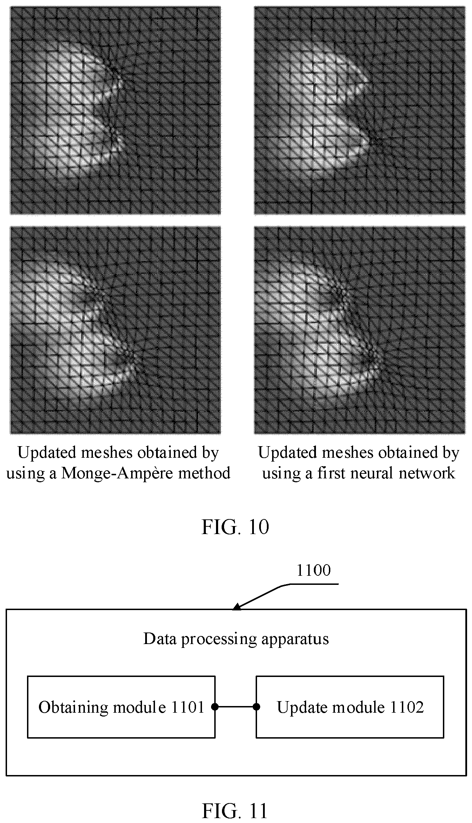

Then, an experiment is performed by using the Burgers equation in the PDE. When the trained first neural network processes the data in the test set, the generated updated mesh does not fold. Compared with the uniform mesh, an error of PDE solution can be reduced by 48.92±1.33% on average by using the updated mesh generated by the first neural network to solve the PDE. By contrast, an error of PDE solution can be reduced by 60.24% on average by using the updated mesh obtained by using the conventional Monge-Ampère method to solve the PDE. In addition, average time consumed when mesh update is performed by using the Monge-Ampère method is 81590.64 ms, and average time consumed when mesh update is performed by using the first neural network in this embodiment of this application is 5.54±0.02 ms. Therefore, performing mesh update by using the first neural network in this embodiment of this application can achieve a PDE solution gain close to that of the conventional Monge-Ampère method, and time consumption is only one thousandth. For example, FIG. 10 is a schematic diagram of comparison between mesh update performed by using the first neural network and mesh update performed by using the Monge-Ampère method according to an embodiment of this application. Two left sub-schematic diagrams in FIG. 10 represent a schematic diagram of an updated mesh obtained by using the Monge-Ampère method, and two right sub-schematic diagrams in FIG. 10 represent a schematic diagram of an updated mesh obtained by using the first neural network provided in this embodiment of this application. As shown in the figure, updated meshes obtained by using the first neural network and the conventional Monge-Ampère method in this embodiment of this application are similar.

Based on embodiments corresponding to FIG. 1 to FIG. 10, to better implement the foregoing solutions in embodiments of this application, the following further provides related devices configured to implement the foregoing solutions. Specifically, FIG. 11 is a schematic diagram of a structure of a data processing apparatus according to an embodiment of this application. A data processing apparatus 1100 includes: an obtaining module 1101, configured to obtain first information, where the first information includes a constraint condition of a parameter in a to-be-solved partial differential equation PDE and an initial mesh corresponding to the PDE, the PDE is obtained based on a to-be-simulated object, a shape of the initial mesh is determined based on the to-be-simulated object, the initial mesh includes N first mesh points, and N is a positive integer; and an update module 1102, configured to input the first information into a first neural network to update the initial mesh by using the first neural network, to obtain N second mesh points output by the first neural network, where the N second mesh points belong to an updated mesh, the updated mesh is used to solve the PDE, and a mapping relationship between the N second mesh points and the N first mesh points is reversible.

In a possible design, the update module 1102 is specifically configured to: input the constraint condition of the parameter in the to-be-solved PDE into a first sub-neural network, to perform a feature extraction operation by using the first sub-neural network, to obtain feature information of the constraint condition; and update the initial mesh by using a second sub-neural network based on the feature information of the constraint condition and the initial mesh corresponding to the PDE, to obtain the N second mesh points. The first sub-neural network and the second sub-neural network are included in the first neural network.

In a possible design, the second sub-neural network is obtained based on a spline neural network (spline neural network).

In a possible design, the first neural network is obtained through training based on a loss function. The loss function includes a first loss function term and a second loss function term. The first loss function term indicates distances between the second mesh points and a target area, and shorter distances between the N second mesh points and the target area indicate a smaller value of the first loss function term. The second loss function term indicates uniformity of distribution of the N second mesh points, and more uniform distribution of the N second mesh points indicates a smaller value of the second loss function term.

In a possible design, the first neural network is obtained through training based on a loss function. The loss function includes a third loss function term, the updated mesh is used to obtain a predicted solution of the PDE on the updated mesh, and the third loss function term indicates a similarity between the predicted solution and an expected solution of the PDE on the updated mesh.

In a possible design, the first neural network is obtained through training based on a loss function. The loss function includes a fourth loss function term, and the fourth loss function term indicates a similarity between the N second mesh points and N expected mesh points. The N expected mesh points are obtained by using any one of the following apparatuses: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method.

In a possible design, the PDE is used to represent any one of the following information: a thermal field generated by a heat emitting element on a chip, deformation generated when a product is under pressure, or deformation generated when a product component is under pressure.

It should be noted that content such as information exchange and an execution process between the modules/units in the data processing apparatus 1100 is based on a same concept as the method embodiment corresponding to FIG. 8 or FIG. 9 in this application. For specific content, refer to the descriptions in the foregoing method embodiments of this application. Details are not described herein again.

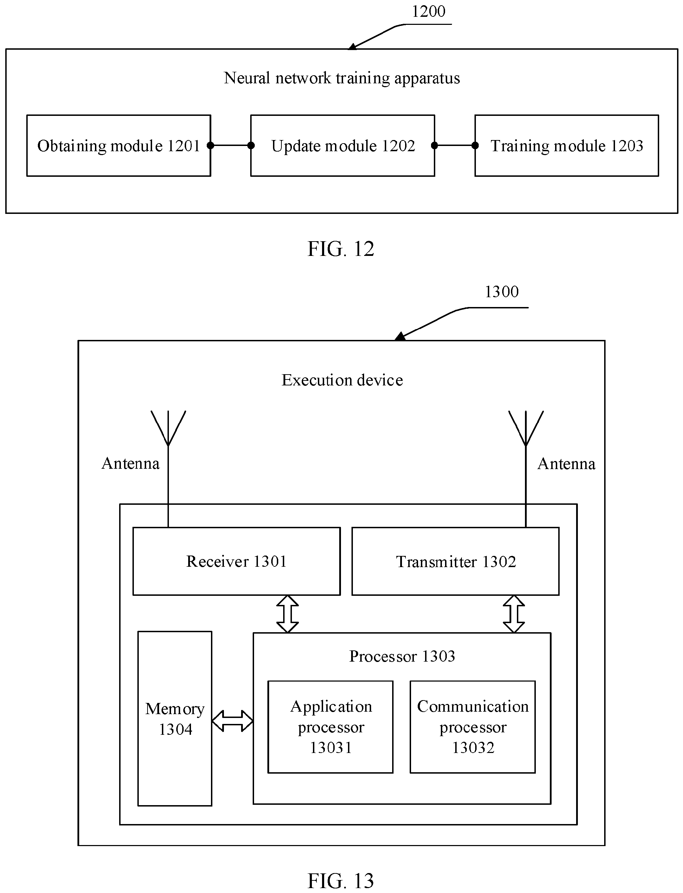

FIG. 12 is a schematic diagram of a structure of a neural network training apparatus according to an embodiment of this application. A neural network training apparatus 1200 includes: an obtaining module 1201, configured to obtain first information, where the first information includes a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh includes N first mesh points, and N is a positive integer; an update module 1202, configured to input the first information into a first neural network to update the initial mesh by using the first neural network, to obtain N prediction mesh points output by the first neural network, where the N prediction mesh points belong to an updated mesh, the updated mesh is used to solve the PDE, and a mapping relationship between the N prediction mesh points and the N first mesh points is reversible; and a training module 1203, configured to train the first neural network by using a loss function, to obtain a trained neural network, where a value of the loss function is obtained based on the N prediction mesh points.

In a possible design, the loss function includes a first loss function term and a second loss function term. The training module 1203 is specifically configured to: generate a value of the first loss function term based on distances between the N prediction mesh points and a target area, where the first loss function term indicates the distances between the N prediction mesh points and the target area, and shorter distances between N second mesh points and the target area indicate a smaller value of the first loss function term; generate a value of the second loss function term based on the N prediction mesh points, where the second loss function term indicates uniformity of distribution of the N prediction mesh points, and more uniform distribution of the N prediction mesh points indicates a smaller value of the second loss function term; and generate the value of the loss function based on the value of the first loss function term and the value of the second loss function term, and train the first neural network based on the value of the loss function.

In a possible design, the loss function includes a third loss function term. The training module 1203 is specifically configured to: generate the value of the loss function based on a value of the third loss function term; and train the first neural network based on the value of the loss function. The third loss function term indicates a similarity between a predicted solution and an expected solution of the PDE on the updated mesh.

In a possible design, the neural network training apparatus 1200 further includes: a solving module, configured to solve the PDE based on the updated mesh and by using a PDE solver, to obtain the predicted solution of the PDE on the updated mesh, where the predicted solution of the PDE on the updated mesh is used to generate the value of the third loss function term; or an input module, configured to input the updated mesh and the PDE into a second neural network, to obtain a difference, generated by the second neural network, between a predicted solution and an expected solution of a PDE on the updated mesh.

In a possible design, the loss function includes a fourth loss function term. The training module 1203 is specifically configured to: generate a value of the fourth loss function term based on a similarity between the N prediction mesh points and N expected mesh points, where the fourth loss function term indicates a similarity between the N second mesh points and the N expected mesh points, and the N expected mesh points are obtained by using any one of the following apparatuses: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method; and generate the value of the loss function based on the value of the fourth loss function term, and train the first neural network based on the value of the loss function.

It should be noted that content such as information exchange and an execution process between modules/units in the neural network training apparatus 1200 is based on a same concept as the method embodiments corresponding to FIG. 3A and FIG. 3B to FIG. 7 in this application. For specific content, refer to the descriptions in the foregoing method embodiments of this application. Details are not described herein again.

The following describes an execution device according to an embodiment of this application. FIG. 13 is a schematic diagram of a structure of an execution device according to an embodiment of this application. The data processing apparatus 1100 described in the embodiment corresponding to FIG. 11 may be deployed on an execution device 1300. Specifically, the execution device 1300 includes a receiver 1301, a transmitter 1302, a processor 1303, and a memory 1304 (there may be one or more processors 1303 in the execution device 1300, and one processor is used as an example in FIG. 13.) The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the execution device. In specific application, components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1303, or may be implemented by the processor 1303. The processor 1303 may be an integrated circuit chip and has a signal processing capability. In an implementation process, steps in the foregoing methods can be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware of the processor.

The receiver 1301 may be configured to: receive input digital or character information, and generate signal input related to a setting related to and function control of the execution device. The transmitter 1302 may be configured to output digital or character information through a first interface. The transmitter 1302 may be further configured to send an instruction to a disk pack through the first interface, to modify data in the disk pack. The transmitter 1302 may further include a display device, for example, a display.

In this embodiment of this application, the application processor 13031 in the processor 1303 is configured to perform the data processing method performed by the execution device in the embodiment corresponding to FIG. 8 or FIG. 9. Specifically, the application processor 13031 is configured to perform the following steps:
obtaining first information, where the first information includes a constraint condition of a parameter in a to-be-solved partial differential equation PDE and an initial mesh corresponding to the PDE, the PDE is obtained based on a to-be-simulated object, a shape of the initial mesh is determined based on the to-be-simulated object, the initial mesh includes N first mesh points, and N is a positive integer; and
inputting the first information into a first neural network to update the initial mesh by using the first neural network, to obtain N second mesh points output by the first neural network, where the N second mesh points belong to an updated mesh, the updated mesh is used to solve the PDE, and a mapping relationship between the N second mesh points and the N first mesh points is reversible.

It should be noted that a specific manner in which the application processor 13031 performs the foregoing steps is based on a same concept as the method embodiment corresponding to FIG. 8 or FIG. 9 in this application. Technical effect brought by the method is the same as that in the method embodiment corresponding to FIG. 8 or FIG. 9 in this application. For specific content, refer to the descriptions in the foregoing method embodiments of this application. Details are not described herein again.

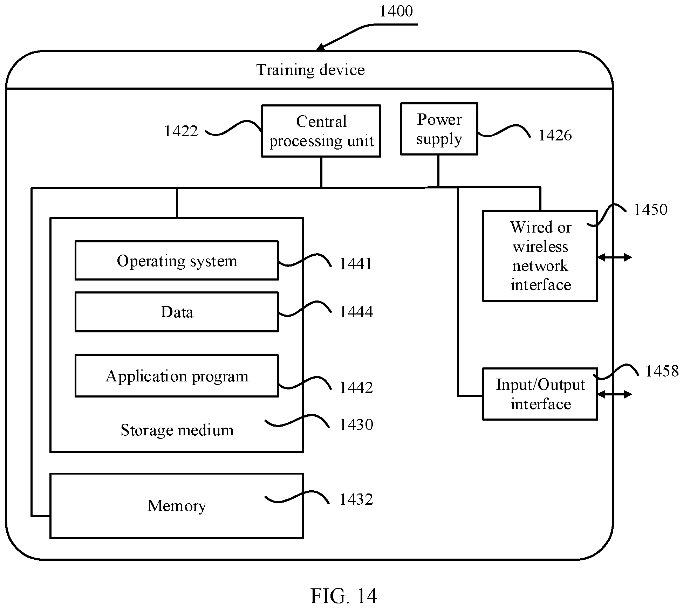

An embodiment of this application further provides a training device. FIG. 14 is a schematic diagram of a structure of a training device according to an embodiment of this application. The neural network training apparatus 1200 described in the embodiment corresponding to FIG. 12 may be deployed on a training device 1400. Specifically, the training device 1400 is implemented by one or more servers. The training device 1400 may vary greatly due to different configurations or performance, and may include one or more central processing units (central processing units, CPU) 1422 (for example, one or more processors) and a memory 1432, and one or more storage media 1430 (for example, one or more mass storage devices) for storing an application program 1442 or data 1444. The memory 1432 and the storage medium 1430 may be used for temporary storage or persistent storage. A program stored in the storage medium 1430 may include one or more modules (not shown in the figure), and each module may include a series of instruction operations for the training device. Further, the central processing unit 1422 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, and/or one or more operating systems 1441, such as Windows ServerTM, Mac OS XTM, UnixTM, LinuxTM, and FreeBSDTM.

In this embodiment of this application, the central processing unit 1422 is configured to perform the neural network training method performed by the training device in the embodiment corresponding to FIG. 12. Specifically, the central processing unit 1422 is configured to perform the following steps:
obtaining first information, where the first information includes a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh includes N first mesh points, and N is a positive integer;
inputting the first information into a first neural network to update the initial mesh by using the first neural network, to obtain N prediction mesh points output by the first neural network, where the N prediction mesh points belong to an updated mesh, the updated mesh is used to solve the PDE, and a mapping relationship between the N prediction mesh points and the N first mesh points is reversible; and
training the first neural network by using a loss function, to obtain a trained neural network, where a value of the loss function is obtained based on the N prediction mesh points.

It should be noted that a specific manner in which the central processing unit 1422 performs the foregoing steps is based on a same concept as the method embodiments corresponding to FIG. 3A and FIG. 3B to FIG. 8 in this application. Technical effect brought by the method is the same as those in the method embodiments corresponding to FIG. 3A and FIG. 3B to FIG. 8 in this application. For specific content, refer to the descriptions in the foregoing method embodiments of this application. Details are not described herein again.

An embodiment of this application further provides a computer program product. The computer program product includes a program. When the program is run on a computer, the computer is enabled to perform steps performed by the training device in the methods described in embodiments shown in FIG. 3A and FIG. 3B to FIG. 7, or the computer is enabled to perform steps performed by the execution device in the method described in the embodiment shown in FIG. 8 or FIG. 9.

An embodiment of this application further provides a computer-readable storage medium. The computer-readable storage medium stores a program used to perform signal processing. When the program is run on a computer, the computer is enabled to perform steps performed by the training device in the methods described in embodiments shown in FIG. 3A and FIG. 3B to FIG. 7, or the computer is enabled to perform steps performed by the execution device in the method described in the embodiment shown in FIG. 8 or FIG. 9.

The data processing apparatus, the neural network training apparatus, the execution device, or the training device provided in embodiments of this application may be specifically a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that the chip performs the neural network training method described in embodiments shown in FIG. 3A and FIG. 3B to FIG. 7, or the chip performs the data processing method described in the embodiment shown in FIG. 8 or FIG. 9. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

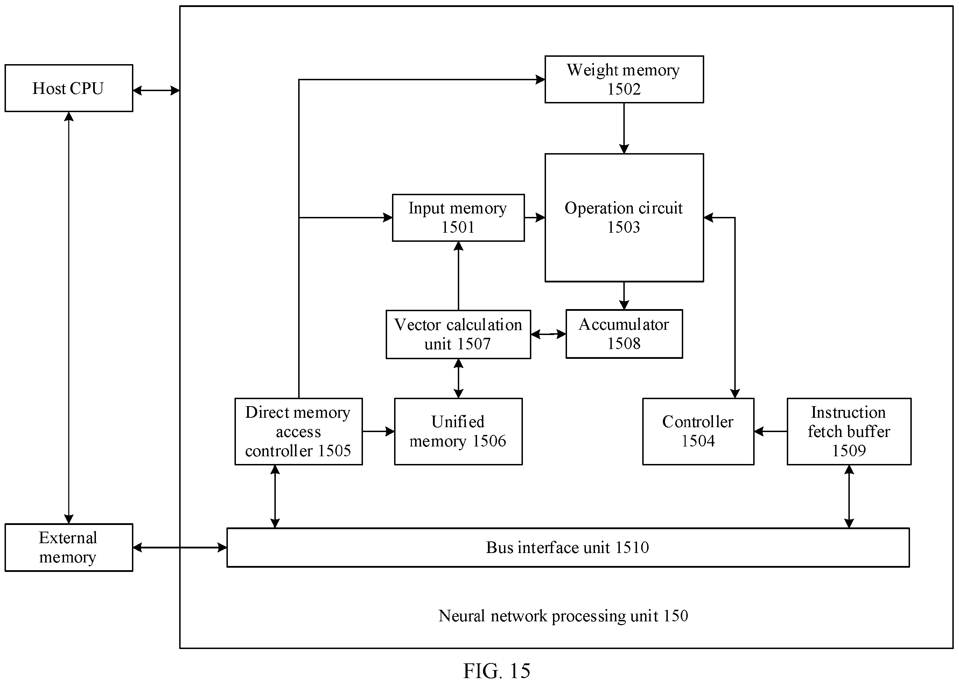

Specifically, FIG. 15 is a schematic diagram of a structure of a chip according to an embodiment of this application. The chip may be represented as a neural network processing unit NPU 150. The NPU 150 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of processing units (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight memory 1502, and buffers the data on each PE in the operation circuit. The operation circuit obtains data of the matrix A from the input memory 1501 to perform a matrix operation on the matrix B, and stores an obtained partial result or an obtained final result of the matrix into an accumulator (accumulator) 1508.

A unified memory 1506 is configured to store input data and output data. Weight data is directly transferred to the weight memory 1502 by using a direct memory access controller (Direct Memory Access Controller, DMAC) 1505. The input data is also transferred to the unified memory 1506 by using the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured to obtain an instruction from an external memory by the instruction fetch buffer 1509, and is further configured to obtain original data of the input matrix A or the weight matrix B from the external memory by the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. When necessary, the vector calculation unit 1507 performs further processing on an output of the operation circuit, for example, vector multiplication, vector addition, an exponential operation, a logarithmic operation, and value comparison. The vector calculation unit 1507 is mainly used for non-convolutional or fully connected layer network calculation in a neural network, for example, Batch Normalization (batch normalization), pixel-level summation, and upsampling of a feature map.

In some implementations, the vector calculation unit 1507 can store a processed output vector in the unified memory 1506. For example, the vector calculation unit 1507 may apply a linear function and/or a non-linear function to an output of the operation circuit 1503, for example, perform linear interpolation on a feature plane extracted by a convolutional layer, or for another example, accumulate value vectors to generate an activation value. In some implementations, the vector calculation unit 1507 generates a normalized value, a pixel-level summation value, or both. In some implementations, the processed output vector can be used as an activation input to the operation circuit 1503, for example, to be used in a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

An operation of each layer in the first neural network and the second neural network provided in the foregoing embodiments may be performed by the operation circuit 1503 or the vector calculation unit 1507.

Any one of the foregoing processors may be a general-purpose central processing unit, a microprocessor, an ASIC, or one or more integrated circuits configured to control execution of a program of the method in the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, wherein the method comprises:
obtaining first information, wherein the first information comprises a constraint condition of a parameter in a to-be-solved partial differential equation PDE and an initial mesh corresponding to the PDE, the PDE is obtained based on a to-be-simulated object, a shape of the initial mesh is determined based on the to-be-simulated object, the initial mesh comprises N first mesh points, and N is a positive integer; and
inputting the first information into a first neural network to update the initial mesh by using the first neural network, to obtain N second mesh points output by the first neural network, wherein the N second mesh points belong to an updated mesh, the updated mesh is used to solve the PDE, and a mapping relationship between the N second mesh points and the N first mesh points is reversible.

2. The method according to claim 1, wherein the inputting the first information into a neural network to update the initial mesh by using the first neural network, to obtain second information output by the first neural network comprises:
inputting the constraint condition of the parameter in the to-be-solved PDE into a first sub-neural network to perform a feature extraction operation by using the first sub-neural network, to obtain feature information of the constraint condition; and
updating, based on the feature information of the constraint condition and the initial mesh corresponding to the PDE, the initial mesh by using a second sub-neural network, to obtain the N second mesh points, wherein the first sub-neural network and the second sub-neural network are comprised in the first neural network.

3. The method according to claim 2, wherein the second sub-neural network is obtained based on a spline neural network (spline neural network).

4. The method according to any one of claims 1 to 3, wherein the first neural network is obtained through training based on a loss function, the loss function comprises a first loss function term and a second loss function term, the first loss function term indicates distances between the second mesh points and a target area, and shorter distances between the N second mesh points and the target area indicate a smaller value of the first loss function term; and
the second loss function term indicates uniformity of distribution of the N second mesh points, and more uniform distribution of the N second mesh points indicates a smaller value of the second loss function term.

5. The method according to any one of claims 1 to 3, wherein the first neural network is obtained through training based on a loss function, the loss function comprises a third loss function term, the updated mesh is used to obtain a predicted solution of the PDE on the updated mesh, and the third loss function term indicates a similarity between the predicted solution and an expected solution of the PDE on the updated mesh.

6. The method according to any one of claims 1 to 3, wherein the first neural network is obtained through training based on a loss function, the loss function comprises a fourth loss function term, the fourth loss function term indicates a similarity between the N second mesh points and N expected mesh points, and the N expected mesh points are obtained by using any one of the following methods: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method.

7. The method according to any one of claims 1 to 3, wherein the PDE is used to represent any one of the following information: a thermal field generated by a heat emitting element on a chip, deformation generated when a product is under pressure, or deformation generated when a product component is under pressure.

8. A neural network training method, wherein the method comprises:
obtaining first information, wherein the first information comprises a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh comprises N first mesh points, and N is a positive integer;
inputting the first information into a first neural network to update the initial mesh by using the first neural network, to obtain N prediction mesh points output by the first neural network, wherein the N prediction mesh points belong to an updated mesh, the updated mesh is used to solve the PDE, and a mapping relationship between the N prediction mesh points and the N first mesh points is reversible; and
training the first neural network by using a loss function, to obtain a trained neural network, wherein a value of the loss function is obtained based on the N prediction mesh points.

9. The method according to claim 8, wherein the loss function comprises a first loss function term and a second loss function term, and the training the first neural network by using a loss function comprises:
generating a value of the first loss function term based on distances between the N prediction mesh points and a target area, wherein the first loss function term indicates the distances between the N prediction mesh points and the target area, and shorter distances between N second mesh points and the target area indicate a smaller value of the first loss function term;
generating a value of the second loss function term based on the N prediction mesh points, wherein the second loss function term indicates uniformity of distribution of the N prediction mesh points, and more uniform distribution of the N prediction mesh points indicates a smaller value of the second loss function term; and
generating the value of the loss function based on the value of the first loss function term and the value of the second loss function term, and training the first neural network based on the value of the loss function.

10. The method according to claim 8 or 9, wherein the loss function comprises a third loss function term, and the training the first neural network by using a loss function comprises:
generating the value of the loss function based on a value of the third loss function term, and training the first neural network based on the value of the loss function, wherein the third loss function term indicates a similarity between a predicted solution and an expected solution of the PDE on the updated mesh.

11. The method according to claim 10, wherein before the generating the value of the loss function based on a value of the third loss function term, the method further comprises:
solving the PDE based on the updated mesh and by using a PDE solver, to obtain the predicted solution of the PDE on the updated mesh, wherein the predicted solution of the PDE on the updated mesh is used to generate the value of the third loss function term; or
inputting the updated mesh and the PDE into a second neural network, to obtain a difference, generated by the second neural network, between the predicted solution and the expected solution of the PDE on the updated mesh.

12. The method according to claim 8 or 9, wherein the loss function comprises a fourth loss function term, and the training the first neural network by using a loss function comprises:
generating a value of the fourth loss function term based on a similarity between the N prediction mesh points and N expected mesh points, wherein the fourth loss function term indicates a similarity between the N second mesh points and the N expected mesh points, and the N expected mesh points are obtained by using any one of the following methods: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method; and
generating the value of the loss function based on the value of the fourth loss function term, and training the first neural network based on the value of the loss function.

13. A data processing apparatus, wherein the apparatus comprises:
an obtaining module, configured to obtain first information, wherein the first information comprises a constraint condition of a parameter in a to-be-solved partial differential equation PDE and an initial mesh corresponding to the PDE, the PDE is obtained based on a to-be-simulated object, a shape of the initial mesh is determined based on the to-be-simulated object, the initial mesh comprises N first mesh points, and N is a positive integer; and
an update module, configured to input the first information into a first neural network to update the initial mesh by using the first neural network, to obtain N second mesh points output by the first neural network, wherein the N second mesh points belong to an updated mesh, the updated mesh is used to solve the PDE, and a mapping relationship between the N second mesh points and the N first mesh points is reversible.

14. The apparatus according to claim 13, wherein the update module is specifically configured to:
input the constraint condition of the parameter in the to-be-solved PDE into a first sub-neural network to perform a feature extraction operation by using the first sub-neural network, to obtain feature information of the constraint condition; and
update, based on the feature information of the constraint condition and the initial mesh corresponding to the PDE, the initial mesh by using a second sub-neural network, to obtain the N second mesh points, wherein the first sub-neural network and the second sub-neural network are comprised in the first neural network.

15. The apparatus according to claim 14, wherein the second sub-neural network is obtained based on a spline neural network (spline neural network).

16. The apparatus according to any one of claims 13 to 15, wherein the first neural network is obtained through training based on a loss function, the loss function comprises a first loss function term and a second loss function term, the first loss function term indicates distances between the second mesh points and a target area, and shorter distances between the N second mesh points and the target area indicate a smaller value of the first loss function term; and
the second loss function term indicates uniformity of distribution of the N second mesh points, and more uniform distribution of the N second mesh points indicates a smaller value of the second loss function term.

17. The apparatus according to any one of claims 13 to 15, wherein the first neural network is obtained through training based on a loss function, the loss function comprises a third loss function term, the updated mesh is used to obtain a predicted solution of the PDE on the updated mesh, and the third loss function term indicates a similarity between the predicted solution and an expected solution of the PDE on the updated mesh.

18. The apparatus according to any one of claims 13 to 15, wherein the first neural network is obtained through training based on a loss function, the loss function comprises a fourth loss function term, the fourth loss function term indicates a similarity between the N second mesh points and N expected mesh points, and the N expected mesh points are obtained by using any one of the following apparatuses: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method.

19. The apparatus according to any one of claims 13 to 15, wherein the PDE is used to represent any one of the following information: a thermal field generated by a heat emitting element on a chip, deformation generated when a product is under pressure, or deformation generated when a product component is under pressure.

20. A neural network training apparatus, wherein the apparatus comprises:
an obtaining module, configured to obtain first information, wherein the first information comprises a constraint condition of a parameter in a to-be-solved partial differential equation PDE and an initial mesh corresponding to the PDE, the PDE corresponds to a to-be-simulated object, a shape of the initial mesh is determined based on the to-be-simulated object, the initial mesh comprises N first mesh points, and N is a positive integer;
an update module, configured to input the first information into a first neural network to update the initial mesh by using the first neural network, to obtain N prediction mesh points output by the first neural network, wherein the N prediction mesh points belong to an updated mesh, the updated mesh is used to solve the PDE, and a mapping relationship between the N prediction mesh points and the N first mesh points is reversible; and
a training module, configured to train the first neural network by using a loss function, to obtain a trained neural network, wherein a value of the loss function is obtained based on the N prediction mesh points.

21. The apparatus according to claim 20, wherein the loss function comprises a first loss function term and a second loss function term, and the training module is specifically configured to:
generate a value of the first loss function term based on distances between the N prediction mesh points and a target area, wherein the first loss function term indicates the distances between the N prediction mesh points and the target area, and shorter distances between N second mesh points and the target area indicate a smaller value of the first loss function term;
generate a value of the second loss function term based on the N prediction mesh points, wherein the second loss function term indicates uniformity of distribution of the N prediction mesh points, and more uniform distribution of the N prediction mesh points indicates a smaller value of the second loss function term; and
generate the value of the loss function based on the value of the first loss function term and the value of the second loss function term, and train the first neural network based on the value of the loss function.

22. The apparatus according to claim 20 or 21, wherein the loss function comprises a third loss function term, and the training module is specifically configured to: generate the value of the loss function based on a value of the third loss function term, and train the first neural network based on the value of the loss function, wherein the third loss function term indicates a similarity between a predicted solution and an expected solution of the PDE on the updated mesh.

23. The apparatus according to claim 22, wherein the apparatus further comprises:
a solving module, configured to solve the PDE based on the updated mesh and by using a PDE solver, to obtain the predicted solution of the PDE on the updated mesh, wherein the predicted solution of the PDE on the updated mesh is used to generate the value of the third loss function term; or
an input module, configured to input the updated mesh and the PDE into a second neural network, to obtain a difference, generated by the second neural network, between the predicted solution and the expected solution of the PDE on the updated mesh.

24. The apparatus according to claim 20 or 21, wherein the loss function comprises a fourth loss function term, and the training module is specifically configured to:
generate a value of the fourth loss function term based on a similarity between the N prediction mesh points and N expected mesh points, wherein the fourth loss function term indicates a similarity between the N second mesh points and the N expected mesh points, and the N expected mesh points are obtained by using any one of the following apparatuses: a Monge-Ampère method, a moving mesh finite element method (moving mesh finite element method), an attraction and repulsion-based r-adaptation (attraction and repulsion-based r-adaptation) method, and a moving mesh partial differential equation (moving mesh PDE) method; and
generate the value of the loss function based on the value of the fourth loss function term, and train the first neural network based on the value of the loss function.

25. A computer program product, wherein the computer program product comprises a program, and when the program is run on a computer, the computer is enabled to perform the method according to any one of claims 1 to 7, or the computer is enabled to perform the method according to any one of claims 8 to 12.

26. A computer-readable storage medium, wherein the computer-readable storage medium stores a program, and when the program is run on a computer, the computer is enabled to perform the method according to any one of claims 1 to 7, or the computer is enabled to perform the method according to any one of claims 8 to 12.

27. An execution device, comprising a processor and a memory, wherein the processor is coupled to the memory;
the memory is configured to store a program; and
the processor is configured to execute the program in the memory, to enable the execution device to perform the method according to any one of claims 1 to 7.

28. A training device, comprising a processor and a memory, wherein the processor is coupled to the memory;
the memory is configured to store a program; and
the processor is configured to execute the program in the memory, to enable the training device to perform the method according to any one of claims 8 to 12.
